# EUROPEAN PATENT APPLICATION

(11) **EP 4 645 485 A1**
(43) Date of publication of application: **05.11.2025**
(21) Application number: 24883596.9
(22) Date of filing: 30.07.2024
(51) Int. Cl.: H01M 10/04, H01M 50/584, H01M 10/42

(54) **PAIRING DEVICE AND PAIRING METHOD**

(30) Priority: 14.03.2024 CN 202410293557
(71) Applicant: Contemporary Amperex Technology Co., Limited, Ningde, Fujian 352100 (CN)
(72) Inventor: PAN, Wensheng, Fujian 352100 (CN); YANG, Mukai, Fujian 352100 (CN); HUANG, Dengdeng, Fujian 352100 (CN); HUANG, Qinkun, Fujian 352100 (CN); ZHANG, Zhiguo, Fujian 352100 (CN)
(74) Representative: Herrmann, Uwe
(86) International application number: PCT/CN2024/108613
(87) International publication number: WO 2025/189647

(57) **Abstract**

This disclosure provides a pairing device and a pairing method. The pairing device includes a first positioning mechanism having a first pairing platform for placing the first workpiece; and a second positioning mechanism having a second pairing platform for placing the second workpiece. The first positioning mechanism and the second positioning mechanism are configured to enable at least one of the first pairing platform and the second pairing platform to move along a first direction, and enable at least one of the first pairing platform and the second pairing platform to rotate around the first direction. The first workpiece and the second workpiece are enabled to have a prescribed orientation by positioning the first pairing platform and the second pairing platform at staggered positions along the first direction, and rotating at least one of the first pairing platform and the second pairing platform around the first direction. The first pairing platform and the second pairing platform are brought closer along the first direction to pair the first workpiece and the second workpiece having the prescribed orientation. This disclosure can reduce damage to tabs.

## Description

### CROSS-REFERENCE TO RELATED APPLICATIONS

This disclosure is based on and claims priority to Chinese Patent Application No. 202410293557.2 filed on March 14, 2024 and entitled "PAIRING DEVICE AND PAIRING METHOD," which is incorporated herein by reference in its entirety.

### TECHNICAL FIELD

This disclosure relates to the field of battery manufacturing technologies, and more particularly, to a pairing device and a pairing method.

### BACKGROUND

The application of new energy batteries in daily life and industry is becoming increasingly widespread. For example, new energy vehicles equipped with batteries have been widely used. In addition, batteries are also increasingly applied in the field of energy storage and the like. In new energy vehicles equipped with batteries, the batteries can be configured to fully or partially provide power. In the field of energy storage, batteries can be installed in energy storage containers or directly installed on the user side.

Tabs of a battery are components that current must pass through during a conduction process. The integrity of the tabs is related to the charge and discharge performance of the battery. Therefore, how to reduce damage to the tabs during a battery production process to improve the integrity of the tabs is one of the issues that the industry needs to address.

### SUMMARY

To address the above technical problems, this disclosure provides a pairing device and a pairing method capable of reducing damage to tabs.

This disclosure is implemented through the following technical solutions.

A first aspect of this disclosure provides a pairing device. The pairing device is configured to pair a first workpiece and a second workpiece in a prescribed orientation, and the pairing device includes a misalignment pairing apparatus. The misalignment pairing apparatus includes a first positioning mechanism having a first pairing platform for placing the first workpiece; and a second positioning mechanism having a second pairing platform for placing the second workpiece. The first positioning mechanism and the second positioning mechanism are configured to enable at least one of the first pairing platform and the second pairing platform to move along a first direction, and enable at least one of the first pairing platform and the second pairing platform to rotate around the first direction. The first workpiece and the second workpiece are enabled to have the prescribed orientation by positioning the first pairing platform and the second pairing platform at staggered positions along the first direction, and rotating at least one of the first pairing platform and the second pairing platform around the first direction. The first pairing platform and the second pairing platform are brought closer along the first direction to pair the first workpiece and the second workpiece having the prescribed orientation.

When pairing the first workpiece and the second workpiece by using the pairing device provided by the embodiments of this disclosure, the misalignment pairing apparatus positions the first pairing platform and the second pairing platform at staggered positions along the first direction, then enables at least one of the first pairing platform and the second pairing platform to rotate around the first direction to make the first workpiece and the second workpiece have the prescribed orientation; and finally, brings the first pairing platform and the second pairing platform closer along the first direction to pair the first workpiece and the second workpiece having the prescribed orientation. In this way, pairing of the first workpiece and the second workpiece can be achieved. In addition, during the rotation process, since the two workpieces are staggered along the first direction, the spaces traversed by both or one of them during rotation do not overlap, meaning that the two workpieces do not interfere with each other. Moreover, during the processes of moving apart and moving closer, the two workpieces do not interfere with each other either. Therefore, the likelihood of the two workpieces coming into contact during the pairing process can be reduced, thereby improving the integrity of the two workpieces. Thus, when the pairing device is applied to pair jelly rolls, no contact occurs between the jelly rolls during the pairing process of the jelly rolls, reducing the likelihood of damaging tabs and thereby improving the integrity of the tabs.

In some embodiments, the first pairing platform has a first bearing surface perpendicular to the first direction, and the first bearing surface is configured to support the first workpiece from one side of the first workpiece along the first direction; and the second pairing platform has a second bearing surface perpendicular to the first direction, and the second bearing surface is configured to support the second workpiece from one side of the second workpiece along the first direction.

The first pairing platform and the second pairing platform bear and move the workpieces through support, eliminating the need to use mechanical grippers to grasp and move the workpieces, thus simplifying the structure of the pairing device.

In some embodiments, the first positioning mechanism includes a first mounting frame and the first pairing platform mounted on the first mounting frame, a first linear drive apparatus is mounted on the first mounting frame, and the first pairing platform is capable of reciprocating along the first direction under the drive of the first linear drive apparatus; and the second positioning mechanism includes a second mounting frame and the second pairing platform mounted on the second mounting frame, a rotary drive apparatus is mounted on the second mounting frame, and the second pairing platform is capable of rotating at least 180 degrees around the first direction under the drive of the rotary drive apparatus.

This achieves the movement of the first workpiece and the second workpiece away from each other along the first direction, the rotation of the second workpiece around the first direction, and the movement of the first workpiece and the second workpiece closer to each other, thereby realizing the pairing of the workpieces. Moreover, the first linear drive apparatus and the rotary drive apparatus are respectively provided in the first positioning mechanism and the second positioning mechanism, rather than being mounted in the same positioning mechanism, making the mounting structure relatively simple and the space occupation within the two positioning mechanisms more balanced, which helps reduce the overall volume of the misalignment pairing apparatus. Additionally, the actions of linear driving and rotary driving are independent of each other and do not interfere, ensuring smooth execution of each step of the pairing process and improving the pairing effect.

In some embodiments, the first pairing platform includes a first bearing plate providing the first bearing surface, where the first bearing plate is connected to an output end of the first linear drive apparatus; a first positioning block movably disposed on the first bearing plate along a second direction, where the first positioning block is capable of moving to a position abutting the first workpiece; and a second positioning block movably disposed on the first bearing plate along a third direction, where the second positioning block is capable of moving to a position abutting the first workpiece; where the first direction, the second direction, and the third direction are pairwise perpendicular.

The first workpiece is placed on the first bearing surface of the first bearing plate, and the first positioning block and the second positioning block abut the first workpiece from the second direction and the third direction, respectively, stably restricting the position of the first workpiece to facilitate subsequent linear movement or rotation actions.

In some embodiments, the second pairing platform includes a second bearing plate providing the second bearing surface, where the second bearing plate is connected to an output end of the rotary drive apparatus; and a third positioning block and a fourth positioning block that are movably disposed on the second bearing plate along directions perpendicular to the first direction, and the third positioning block and the fourth positioning block are capable of moving to positions abutting the second workpiece, where a movement direction of the third positioning block and a movement direction of the fourth positioning block are perpendicular to each other.

The second workpiece is placed on the second bearing surface of the second bearing plate, and the third positioning block and the fourth positioning block abut the second workpiece from two perpendicular directions, with the movement directions of the third positioning block and the fourth positioning block both are perpendicular to the first direction, stably restricting the position of the second workpiece to facilitate subsequent linear movement or rotation actions.

In some embodiments, the first positioning mechanism and the second positioning mechanism are configured to further enable the first pairing platform and the second pairing platform to move closer to or away from each other along a second direction, where the second direction is perpendicular to the first direction.

Before rotating around the first direction, the first pairing platform and the second pairing platform can be moved away from each other along the second direction to increase the spacing between the first workpiece and the second workpiece along the second direction. In this way, during the rotation of the first workpiece or the second workpiece around the first direction, interference is less likely to occur, further reducing the likelihood of workpiece damage.

In some embodiments, the first mounting frame of the first positioning mechanism is mounted on a first guide rail extending along the second direction and configured to be capable of sliding along the first guide rail.

In this way, the first mounting frame is movable relative to the first guide rail along the second direction, enabling the first pairing platform mounted on the first mounting frame to move along the second direction, thereby allowing the first pairing platform and the second pairing platform to move closer to or away from each other along the second direction. Moreover, the first guide rail serves as a sliding guide, improving the smoothness of the sliding of the first positioning mechanism.

In some embodiments, the misalignment pairing apparatus includes a base, and the second mounting frame of the second positioning mechanism is fixedly disposed on the base; and the first guide rail is fixedly mounted on the base, the first guide rail is provided with a second linear drive apparatus, the first mounting frame is connected to an output end of the second linear drive apparatus, and the first mounting frame is capable of reciprocating along the second direction under the drive of the second linear drive apparatus, thereby enabling the first pairing platform to move closer to or away from the second pairing platform.

In this way, the first pairing platform is enabled to move closer to or away from the second pairing platform, thereby adjusting the spacing between the first workpiece and the second workpiece in the second direction. The first positioning mechanism and the second positioning mechanism are both disposed on the base, forming an integral unit, facilitating the overall assembly and disassembly of the misalignment pairing apparatus.

In some embodiments, the first workpiece includes at least one first jelly roll, and the first jelly roll has a protruding first tab; the second workpiece includes at least one second jelly roll, and the second jelly roll has a protruding second tab; the prescribed orientation includes: along a second direction perpendicular to the first direction, the first tab of the first jelly roll protruding from a side facing towards the second jelly roll, and the second tab of the second jelly roll protruding from a side facing towards the first jelly roll; and the pairing includes: the first tab and the second tab of the first jelly roll and the second jelly roll that have the prescribed orientation having portions overlapping and abutting along the first direction.

In this way, the pairing device provided by the embodiments of this disclosure is applied to pair at least two jelly rolls, ensuring that no contact occurs between the jelly rolls during the pairing process of the jelly rolls, reducing the likelihood of damaging tabs, and thereby improving the integrity of the tabs.

In some embodiments, the pairing device further includes a dual-flip pairing apparatus, and the dual-flip pairing apparatus is configured to perform a dual-flip operation and a dual-lowering operation, where the dual-flip operation includes simultaneously flipping two first workpiece components distributed along a second direction perpendicular to the first direction around the second direction; and the dual-lowering operation includes simultaneously moving the two first workpiece components along the first direction to first lowering positions, where the two first workpiece components moved to the first lowering positions are configured to be stacked respectively with two unflipped second workpiece components, so as to form the first workpiece and the second workpiece.

In this way, the dual-flip pairing apparatus flips the two first workpiece components, enabling the two first workpiece components to be stacked with the two second workpiece components in a prescribed posture, forming the first workpiece and the second workpiece. The formation processes of the first workpiece and the second workpiece occur simultaneously, improving forming efficiency and battery production efficiency, while maintaining the relative positions between the two first workpiece components, thereby enhancing the alignment accuracy of the first workpiece and the second workpiece.

In some embodiments, the dual-flip pairing apparatus includes: a first base frame; a dual-lowering drive apparatus mounted on the first base frame; and a dual-flip mechanism connected to an output end of the dual-lowering drive apparatus. The dual-flip mechanism is configured to be capable of respectively clamping the two first workpiece components and performing the dual-flip operation. The dual-lowering drive apparatus is capable of driving the dual-flip mechanism to reciprocate along the first direction to perform the dual-lowering operation.

In this way, the dual-flip mechanism flips the two first workpiece components and then lowers them, placing the flipped first workpiece components at positions close to the second workpiece components to facilitate subsequent stacking operations. Moreover, the dual-flip mechanism simultaneously flips the two first workpiece components, and the dual-lowering drive apparatus simultaneously moves the two first workpiece components along the first direction, helping maintain the relative positions of the two first workpiece components and improving the efficiency of workpiece pairing.

In some embodiments, the dual-flip mechanism includes: a dual-flip mounting frame connected to an output end of the dual-lowering drive apparatus; a dual-flip drive apparatus mounted on the dual-flip mounting frame; and a dual-clamping assembly connected to an output end of the dual-flip drive apparatus. The dual-clamping assembly is configured to be capable of simultaneously clamping the two first workpiece components. The dual-flip drive apparatus is capable of driving the dual-clamping assembly to flip around the second direction to perform the dual-flip operation.

In this way, the dual-flip mechanism is enabled to perform the dual-flip operation. Moreover, the two first workpiece components are simultaneously clamped by the dual-clamping assembly, and when the dual-flip drive apparatus drives the dual-clamping assembly to flip, the two first workpiece components are flipped simultaneously, helping maintain the relative positions of the two first workpiece components and improving the efficiency of workpiece pairing.

In some embodiments, the dual-clamping assembly includes two first clamping mechanisms spaced apart along the second direction, and the first clamping mechanism includes a first clamping mounting frame connected to an output end of the dual-flip drive apparatus; and two first clamping structures respectively connected to the first clamping mounting frame, where the two first clamping structures are disposed opposite and configured to respectively clamp opposite ends of the first workpiece component.

In this way, the stability of the dual-clamping assembly in clamping the two first workpiece components is improved, ensuring smooth execution of the dual-flip operation.

In some embodiments, the first clamping mounting frame includes a first mounting block, a first movable arm drive apparatus, and two first movable arms respectively connected to the first mounting block, the two first clamping structures are connected to the two first movable arms in a one-to-one correspondence, and the first movable arm drive apparatus is mounted on the first mounting block and capable of driving the two first movable arms to move closer to or away from each other.

In this way, moving the two first movable arms closer to or away from each other can improve the compatibility with to-be-clamped workpieces and offer more loading and unloading methods, simplifying loading and unloading steps.

In some embodiments, the pairing device further includes a single-flip pairing apparatus, the single-flip pairing apparatus is configured to be capable of performing a single-flip operation and a single-lowering operation to adjust the first workpiece and the second workpiece that are paired by the dual-flip pairing apparatus into a mutually upside-down posture, where the single-flip operation includes flipping the first workpiece around the second direction; the single-lowering operation includes moving the flipped first workpiece along the first direction to a second lowering position, so that the flipped first workpiece and an unflipped second workpiece are in a mutually upside-down posture, and the first workpiece and the second workpiece in the mutually upside-down posture are capable of being adjusted by the misalignment pairing apparatus to pair in the prescribed orientation.

The single-flip pairing apparatus flips the first workpiece, making the first workpiece and the second workpiece in a mutually upside-down posture, facilitating subsequent further adjustments to the first workpiece and the second workpiece by the misalignment pairing apparatus, advancing the workpiece pairing process.

In some embodiments, the single-flip pairing apparatus includes: a second base frame; a single-lowering drive apparatus mounted on the second base frame; and a single-flip mechanism connected to an output end of the single-lowering drive apparatus, where the single-flip mechanism is configured to be capable of clamping the first workpiece and performing the single-flip operation, where the single-lowering drive apparatus is capable of driving the single-flip mechanism to reciprocate along the first direction to perform the single-lowering operation.

In this way, the single-flip pairing apparatus is enabled to perform the single-flip operation and the single-lowering operation on the first workpiece, making the first workpiece and the second workpiece in a mutually upside-down posture, facilitating subsequent further adjustments to the first workpiece and the second workpiece by the misalignment pairing apparatus, advancing the workpiece pairing process.

In some embodiments, the single-flip mechanism includes a single-flip mounting frame connected to an output end of the single-lowering drive apparatus; a single-flip drive apparatus mounted on the single-flip mounting frame; a single-clamping assembly connected to an output end of the single-flip drive apparatus, where the single-clamping assembly is configured to be capable of clamping the first workpiece; where the single-flip drive apparatus is capable of driving the single-clamping assembly to rotate around the second direction to perform the single-flip operation.

In this way, the single-flip mechanism is enabled to perform the single-flip operation, making the first workpiece assume a predetermined posture, so that the flipped first workpiece and the unflipped second workpiece are in a mutually upside-down posture, facilitating subsequent further adjustments to the first workpiece and the second workpiece by the misalignment pairing apparatus, advancing the workpiece pairing process.

In some embodiments, the first workpiece component and the second workpiece component each include a jelly roll, and the first workpiece and the second workpiece each include a cell group composed of at least two jelly rolls.

In this way, the pairing device provided by the embodiments of this disclosure is applied to pair at least four jelly rolls, ensuring that no contact occurs between the jelly rolls during the pairing process of the jelly rolls, reducing the likelihood of damaging tabs, and thereby improving the integrity of the tabs.

A second aspect of this disclosure provides a pairing method using a pairing device to pair a first workpiece and a second workpiece, where the pairing device includes a first positioning mechanism and a second positioning mechanism, the first positioning mechanism has a first pairing platform; the second positioning mechanism has a second pairing platform; the first positioning mechanism and the second positioning mechanism are configured to be capable of enabling at least one of the first pairing platform and the second pairing platform to move along a first direction, and capable of enabling at least one of the first pairing platform and the second pairing platform to rotate around the first direction; where
the pairing method includes:
a misalignment step of positioning the first pairing platform with the first workpiece placed thereon and the second pairing platform with the second workpiece placed thereon at staggered positions along the first direction;
a rotation step of enabling at least one of the first pairing platform with the first workpiece placed thereon and the second pairing platform with the second workpiece placed thereon to rotate a predetermined angle around the first direction, thereby making the first workpiece and the second workpiece have a prescribed orientation; and
a pairing step of bringing the first pairing platform and the second pairing platform closer along the first direction to pair the first workpiece and the second workpiece having the prescribed orientation.

In the rotation step, since the two workpieces are staggered along the first direction, the spaces traversed by both or one of them during rotation around the first direction do not overlap, meaning that the two workpieces do not interfere with each other. Moreover, in the misalignment and pairing steps, the two workpieces do not interfere with each other either. Therefore, the likelihood of the two workpieces coming into contact during the pairing process can be reduced, thereby improving the integrity of the two workpieces. Thus, when the pairing device is applied to pair jelly rolls, no contact occurs between the jelly rolls during the pairing process of the jelly rolls.

In some embodiments, in the misalignment step, the first pairing platform is moved along the first direction to a position staggered along the first direction relative to the second pairing platform; and/or in the pairing step, the first pairing platform is moved along the first direction to a position close to the second pairing platform to pair the first workpiece and the second workpiece.

In this way, the first positioning mechanism causes the first pairing platform to move along the first direction to perform the misalignment step and the pairing step. In these two steps, the second positioning mechanism can keep the second pairing platform stationary. This can reduce the number of drive apparatuses to save costs, and require fewer actions, thereby helping to improve the controllability of each step.

In some embodiments, before the misalignment step, the pairing method further includes a placement step of placing the first workpiece and the second workpiece with a same orientation on the first pairing platform and the second pairing platform, respectively, and in the rotation step, enabling the second pairing platform with the second workpiece placed thereon to rotate 180 degrees around the first direction, thereby making the first workpiece and the second workpiece have the prescribed orientation, where the prescribed orientation is that the first workpiece and the second workpiece have opposite orientations.

In this way, the pairing method can adjust two workpieces with the same orientation to opposite orientations to place them at predetermined relative positions, thereby enabling smooth pairing of the two workpieces.

In some embodiments, the pairing method further includes a first translation step of enabling the first pairing platform to move away from the second pairing platform along a second direction, where the second direction is perpendicular to the first direction; and a second translation step of enabling the first pairing platform to move closer to the second pairing platform along the second direction, where the first translation step is between the placement step and the misalignment step, and the second translation step is between the rotation step and the pairing step.

Before rotating around the first direction, the first pairing platform and the second pairing platform can be moved away from each other along the second direction to increase the spacing between the first workpiece and the second workpiece along the second direction. In this way, during the rotation of the first workpiece or the second workpiece around the first direction, interference is less likely to occur, further reducing the likelihood of workpiece damage.

In some embodiments, before the misalignment step, the pairing method further includes:
a flipping step of flipping the first workpiece having a first posture around a first flipping center axis into a second posture;
a placement step of placing the first workpiece and the second workpiece with a same orientation on the first pairing platform and the second pairing platform, respectively, where the first workpiece has undergone the flipping step and has the second posture, and the second workpiece has not undergone flipping and has the first posture, and
   in the rotation step, enabling the second pairing platform with the second workpiece placed thereon to rotate 180 degrees around the first direction, thereby making the first workpiece and the second workpiece have the prescribed orientation.

In this way, the first workpiece is flipped from the first posture to the second posture, facilitating subsequent further adjustments to the first workpiece and the second workpiece by the misalignment pairing apparatus, advancing the workpiece pairing process.

In some embodiments, before the misalignment step, the pairing method further includes:
a dual-flipping step of flipping two first workpiece components having a first posture around a second flipping center axis into a second posture;
a stacking step of stacking the two first workpiece components having the second posture, which have undergone the dual-flipping step, respectively with two unflipped second workpiece components having the first posture, so as to form a first workpiece and a second workpiece;
a placement step of placing the first workpiece and the second workpiece with a same orientation on the first pairing platform and the second pairing platform, respectively, and
   in the rotation step, enabling the second pairing platform with the second workpiece placed thereon to rotate 180 degrees around the first direction, thereby making the first workpiece and the second workpiece have the prescribed orientation.

In this way, the formation processes of the first workpiece and the second workpiece occur simultaneously, improving forming efficiency and battery production efficiency, while maintaining the relative positions between the two first workpiece components, thereby enhancing the alignment accuracy of the first workpiece and the second workpiece.

In some embodiments, after the stacking step and before the placement step, the pairing method further includes:
a single-flipping step of flipping the first workpiece, formed by stacking the first workpiece component and the second workpiece component, 180 degrees around a third flipping center axis, and
in the placement step, placing the first workpiece, flipped 180 degrees in the single-flipping step, on the first pairing platform.

The single-flip pairing apparatus flips the first workpiece, making the first workpiece and the second workpiece in a mutually upside-down posture, facilitating subsequent further adjustments to the first workpiece and the second workpiece by the misalignment pairing apparatus, advancing the workpiece pairing process.

### Effects of invention

This disclosure provides a pairing device and a pairing method that are capable of reducing damage to tabs.

### BRIEF DESCRIPTION OF DRAWINGS

Various other advantages and benefits will become apparent to those of ordinary skill in the art by reading the detailed description of the preferred embodiments below. The drawings are provided solely for the purpose of illustrating the preferred embodiments and are not to be considered as limiting this disclosure. Moreover, throughout the drawings, identical reference numerals denote identical components. In the accompanying drawings:
FIG. 1 is a front view of a misalignment pairing apparatus provided by some embodiments of this disclosure;
FIG. 2 is a three-dimensional structural diagram of a structure of a misalignment pairing apparatus provided by some embodiments of this disclosure;
FIG. 3 is a schematic diagram showing posture changes of a first workpiece and a second workpiece during a pairing process of a pairing device provided by some embodiments of this disclosure;
FIG. 4 is a three-dimensional structural diagram of a structure of a dual-flip pairing apparatus provided by some embodiments of this disclosure;
FIG. 5 is a top view of a dual-flip pairing apparatus provided by some embodiments of this disclosure;
FIG. 6 is a three-dimensional structural diagram of a structure of a single-flip pairing apparatus provided by some embodiments of this disclosure;
FIG. 7 is a top view of a single-flip pairing apparatus provided by some embodiments of this disclosure;
FIG. 8 is a top view of a pairing device provided by some embodiments of this disclosure;
FIG. 9 is a schematic diagram showing posture changes of a first workpiece component, a second workpiece component, a first workpiece, and a second workpiece during another pairing process of a pairing device provided by some embodiments of this disclosure;
FIG. 10 is a flowchart of a first pairing method provided by some embodiments of this disclosure;
FIG. 11 is a flowchart of a second pairing method provided by some embodiments of this disclosure;
FIG. 12 is a flowchart of a third pairing method provided by some embodiments of this disclosure;
FIG. 13 is a flowchart of a fourth pairing method provided by some embodiments of this disclosure;
FIG. 14 is a schematic diagram showing posture changes of a first workpiece and a second workpiece during yet another pairing process of a pairing device provided by some embodiments of this disclosure;
FIG. 15 is a flowchart of a sixth pairing method provided by some embodiments of this disclosure; and
FIG. 16 is a flowchart of a seventh pairing method provided by some embodiments of this disclosure.

### Description of Reference Signs

100 first workpiece; 200 second workpiece; 1000 first workpiece component; 2000 second workpiece component; 1 misalignment pairing apparatus; 11 first positioning mechanism; 111 first pairing platform; 1111 first bearing plate; 1112 first positioning block; 1113 second positioning block; 1114 first positioning drive apparatus; 112 first linear drive apparatus; 113 first mounting frame; 114 second linear drive apparatus; 12 second positioning mechanism; 121 second pairing platform; 1211 second bearing plate; 1212 third positioning block; 1213 fourth positioning block; 1214 second positioning drive apparatus; 122 rotary drive apparatus; 123 second mounting frame; 13 base; 14 third linear drive apparatus; 15 second guide rail; 16 second slider; 1151 first guide rail; 1152 first slider; 2 dual-flip pairing apparatus; 21 first base frame; 22 dual-lowering drive apparatus; 23 dual-flip mechanism; 231 dual-flip mounting frame; 232 dual-flip drive apparatus; 233 dual-clamping assembly; 2331 first clamping mounting frame; 23311 first mounting block; 23312 first movable arm; 23313 first movable arm drive apparatus; 2332 first clamping structure; 241 third guide rail; 242 third slider; 3 single-flip pairing apparatus; 31 second base frame; 32 single-lowering drive apparatus; 33 single-flip mechanism; 331 single-flip mounting frame; 332 single-flip drive apparatus; 333 single-clamping assembly; 3331 second clamping mounting frame; 33311 second mounting block; 33312 second movable arm; 33313 second movable arm drive apparatus; 3332 second clamping structure; 341 fourth guide rail; 342 fourth slider; 4 placement platform; 5 workpiece transfer apparatus; and 6 workpiece conveyor line.

### DESCRIPTION OF EMBODIMENTS

The embodiments of the technical solutions of this disclosure will be described in detail below with reference to the accompanying drawings. The following embodiments are merely used to more clearly illustrate the technical solutions of this disclosure and are therefore provided as examples only, not to limit the scope of protection of this disclosure.

Unless otherwise defined, all technical and scientific terms used herein have the same meaning as commonly understood by those skilled in the technical field of this disclosure; the terms used herein are for the purpose of describing specific embodiments only and are not intended to limit this disclosure; the terms "including" and "having" and any variations thereof in the description and the above brief description of drawings of this disclosure are intended to cover non-exclusive inclusion.

In the description of the embodiments of this disclosure, the technical terms "first," "second," "third," and the like are used only to distinguish different objects and should not be understood as indicating or implying relative importance or implicitly indicating the number, specific order, or priority of the indicated technical features. In the description of the embodiments of this disclosure, "multiple" means two or more unless explicitly and specifically defined otherwise.

Reference herein to "embodiment" means that a particular feature, structure, or characteristic described in connection with the embodiment may be included in at least one embodiment of this disclosure. The appearance of this phrase in various places in the specification does not necessarily refer to the same embodiment, nor is it an independent or alternative embodiment mutually exclusive with other embodiments. Persons skilled in the art explicitly and implicitly understand that the embodiments described herein may be combined with other embodiments.

In the description of the embodiments of this disclosure, the term "and/or" merely describes an association relationship between associated objects, indicating that three relationships may exist. For example, A and/or B may indicate: A exists alone, A and B exist simultaneously, and B exists alone. Additionally, the character "/" herein generally indicates that the associated objects before and after are in an "or" relationship.

In the description of the embodiments of this disclosure, the technical terms "length," "width," "thickness," "upper," "lower," "front," "rear," "left," "right," "vertical," "horizontal," "top," "bottom," "inner," "outer," "circumferential," and the like indicate orientations or positional relationships based on the orientations or positional relationships shown in the drawings, solely for the convenience of describing the embodiments of this disclosure and simplifying the description, and do not indicate or imply that the referred device or element must have a specific orientation, be constructed, operated, or used in a specific orientation, and thus should not be construed as limiting the embodiments of this disclosure.

In the description of the embodiments of this disclosure, unless otherwise explicitly specified and defined, the technical terms "mounted," "connected," "connection," "fixed," and the like should be understood broadly. For example, it may be a fixed connection, a detachable connection, or an integral formation; it may be a mechanical connection or an electrical connection; it may be a direct connection or an indirect connection through an intermediary, or it may be an internal communication between two elements or an interaction relationship between two elements. For those of ordinary skill in the art, the specific meanings of the above terms in the embodiments of this disclosure can be understood based on specific circumstances.

In the description of the embodiments of this disclosure, unless otherwise explicitly specified and defined, the technical term "contact" should be understood broadly. It may be direct contact or contact through an intermediate medium layer, it may be contact between two entities with substantially no interaction force, or it may be contact between two entities with an interaction force.

This disclosure is described in detail below.

Currently, the application of new energy batteries in daily life and industry is becoming increasingly widespread. New energy batteries are not only applied to energy storage power systems such as hydropower, thermal power, wind power, and solar power stations, but are also widely used in electric vehicles such as electric bicycles, electric motorcycles, and electric cars, as well as in aerospace and other fields. With the continuous expansion of the application fields of power batteries, the market demand for them is also continuously increasing.

The inventors of this disclosure have noted that some batteries internally have at least two jelly rolls paired in a prescribed orientation. During the production process of such batteries, there is a step of pairing the jelly rolls, and during the pairing process, the jelly rolls are prone to contact at the tabs due to interference between them, thereby enabling damage to the tabs, reducing the integrity of the tabs, affecting the conductive performance of the tabs, and consequently affecting the charge and discharge performance of the battery.

The inventors of this disclosure, through research, have found that by using a pairing device to cause at least one of two jelly rolls to be paired to move away from each other in one direction, making the jelly rolls staggered along that direction, then rotating around that direction by a set angle to make the two have a prescribed orientation, and subsequently bringing the two jelly rolls closer in that direction, the first workpiece and the second workpiece are paired in the prescribed orientation. During the rotation process, since the two jelly rolls are staggered, the spaces traversed by both or one of them during rotation do not overlap, meaning that the two jelly rolls do not interfere with each other. Moreover, during the processes of moving apart and moving closer, the two jelly rolls do not interfere with each other either. Therefore, during the pairing process of the jelly rolls, no contact occurs between the jelly rolls, reducing the likelihood of damaging the tabs and thereby improving the integrity of the tabs.

Based on this design concept, the inventors of this disclosure have designed a pairing device. The pairing device includes a misalignment pairing apparatus, and the misalignment pairing apparatus includes a first positioning mechanism and a second positioning mechanism. The first positioning mechanism has a first pairing platform for placing a first workpiece, and the second positioning mechanism has a second pairing platform for placing a second workpiece. The first positioning mechanism and the second positioning mechanism are configured to be capable of enabling at least one of the first pairing platform and the second pairing platform to move along a first direction, and capable of enabling at least one of the first pairing platform and the second pairing platform to rotate around the first direction.

During the pairing process, the pairing device positions the first pairing platform and the second pairing platform at staggered positions along the first direction, then causes at least one of the first pairing platform and the second pairing platform to rotate around the first direction to make the first workpiece and the second workpiece have a prescribed orientation; finally, by bringing the first pairing platform and the second pairing platform closer along the first direction, the first workpiece and the second workpiece having the prescribed orientation are paired. In this way, pairing of the first workpiece and the second workpiece can be achieved, and during the rotation process, since the two workpieces are staggered along the first direction, the spaces traversed by both or one of them during rotation do not overlap, meaning that the two workpieces do not interfere with each other. Moreover, during the processes of moving apart and moving closer, the two workpieces do not interfere with each other either. Therefore, when applied to pairing jelly rolls, no contact occurs between the jelly rolls during the pairing process of the jelly rolls, reducing the likelihood of damaging the tabs and thereby improving the integrity of the tabs.

The pairing device of the embodiments of this disclosure can be used in the battery production process, for example, for pairing jelly rolls within a battery cell. Certainly, those skilled in the art should understand that the pairing device provided by the embodiments of this disclosure is not only used for pairing various workpieces in the battery production process but can also be used for pairing other workpieces that require pairing.

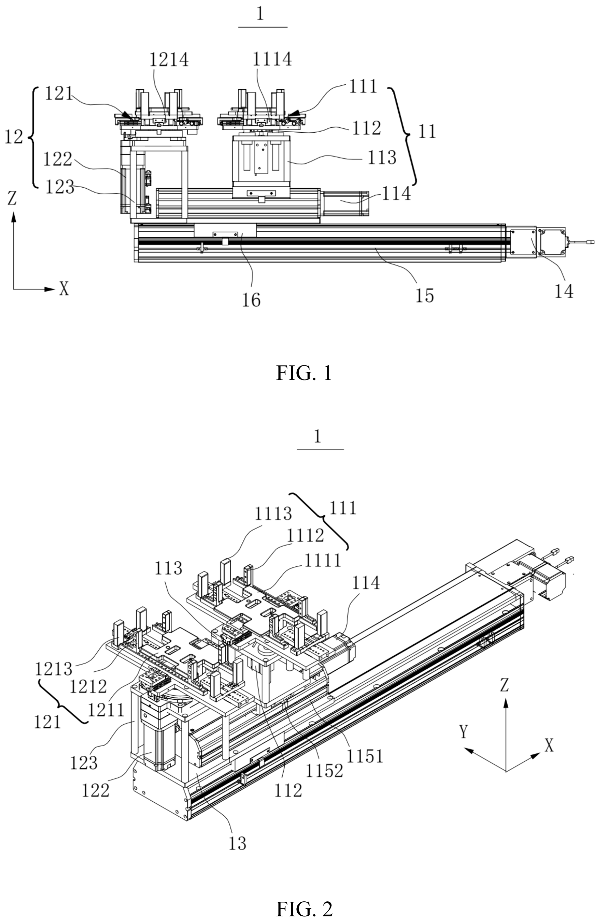

Below, some embodiments of this disclosure are described in detail with reference to FIG. 1 to FIG. 16.

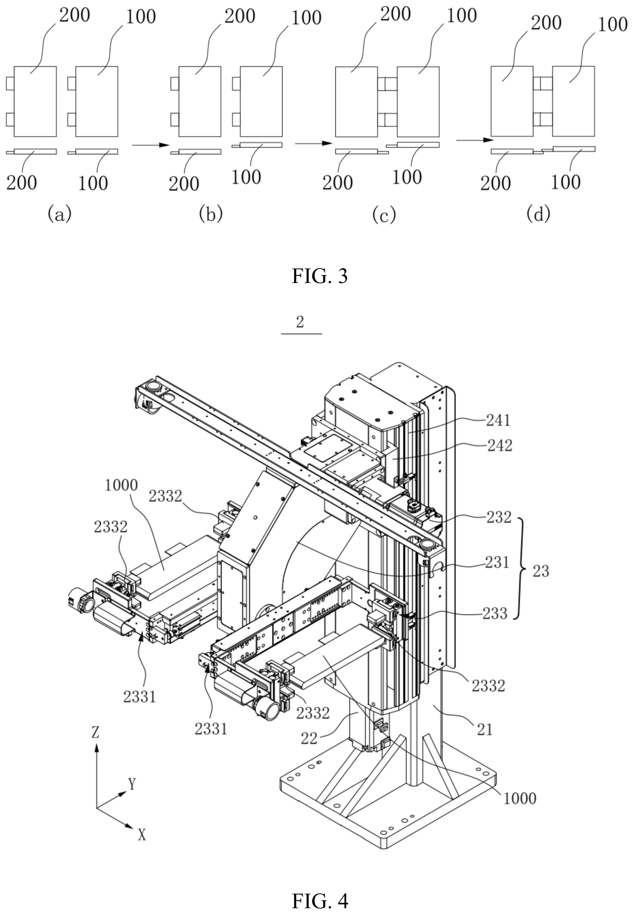

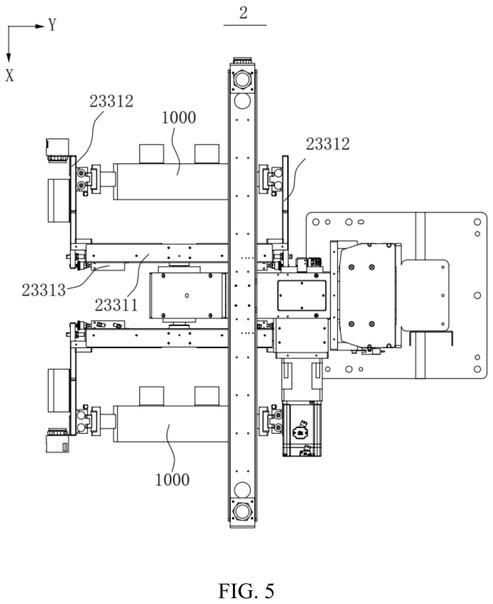

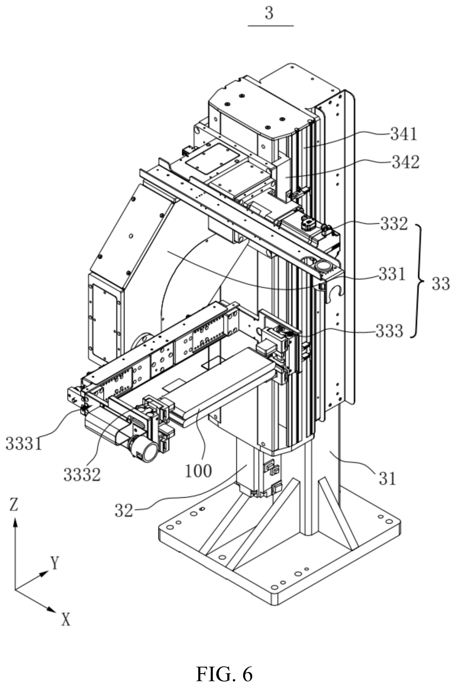

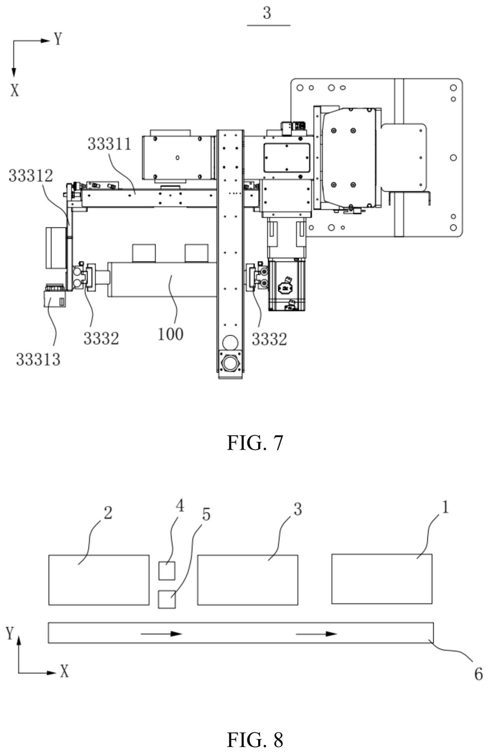

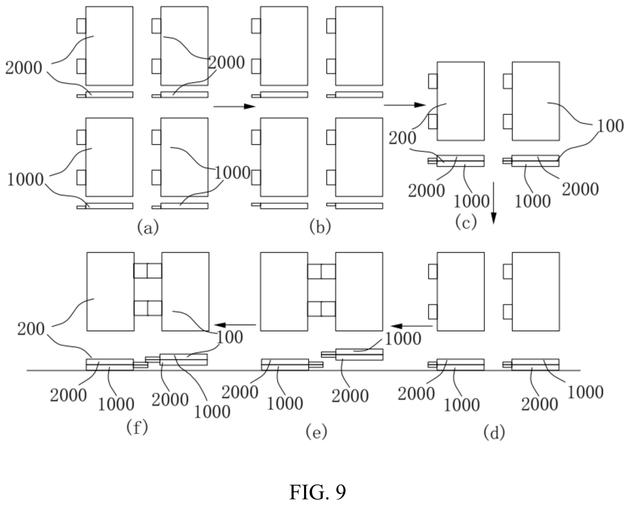

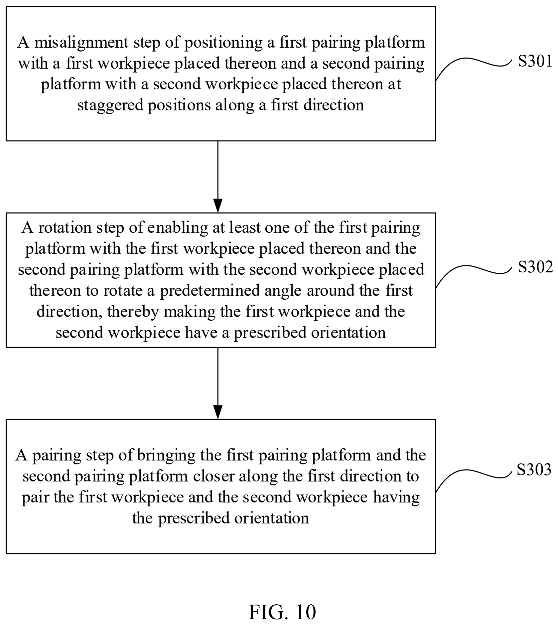

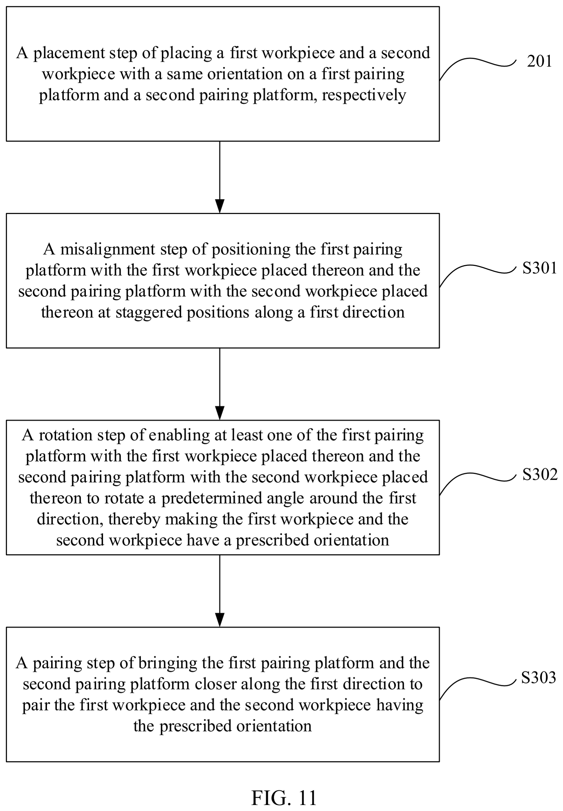

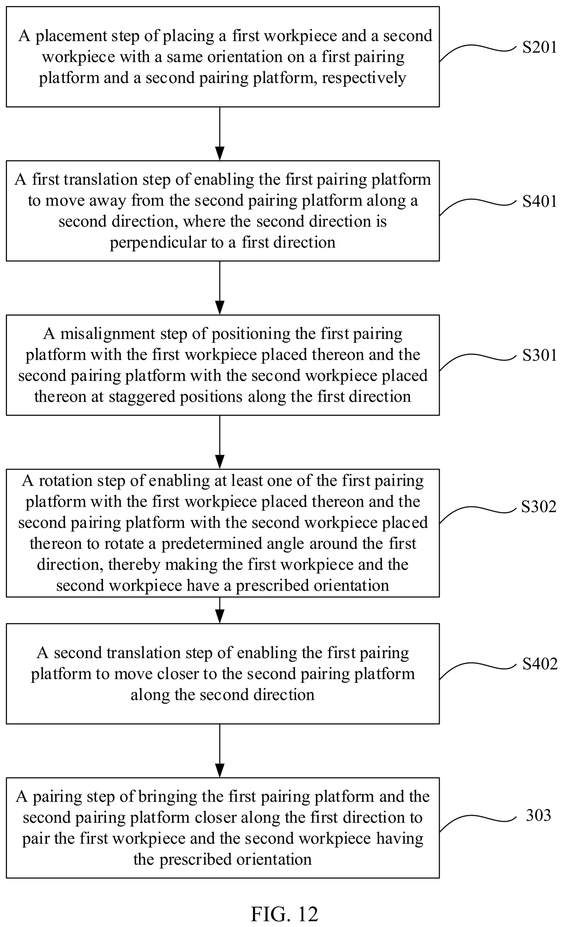

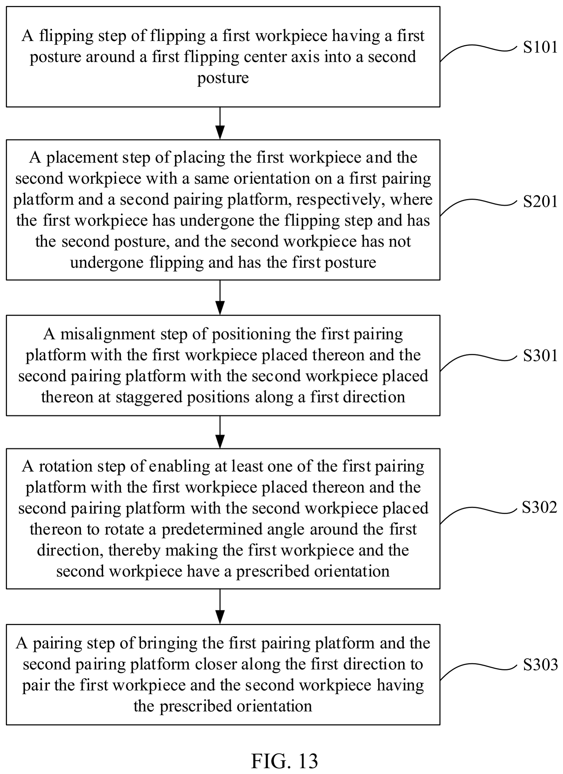

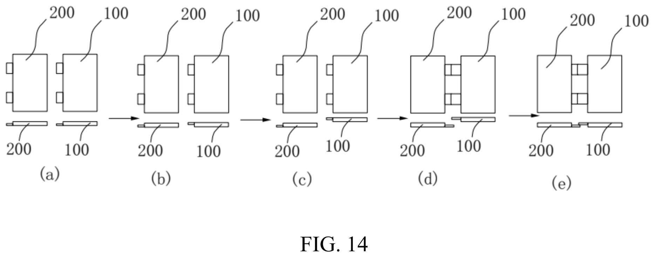

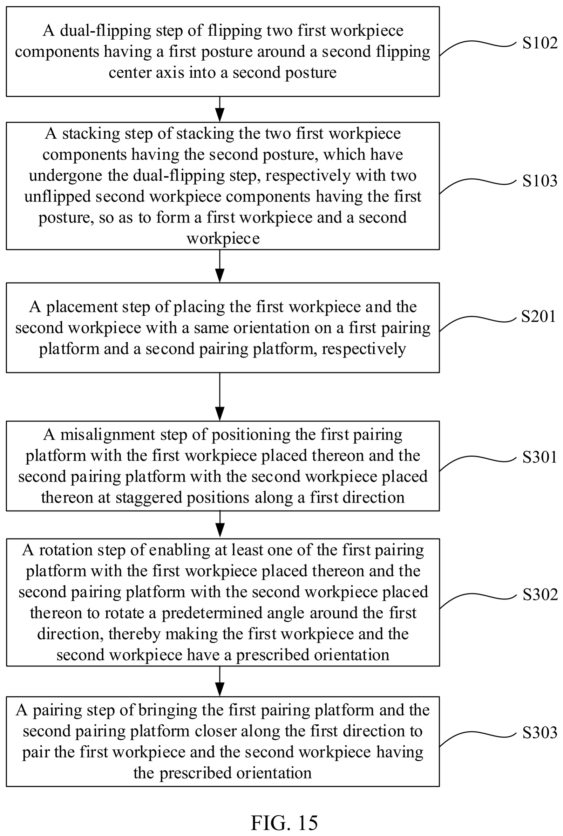

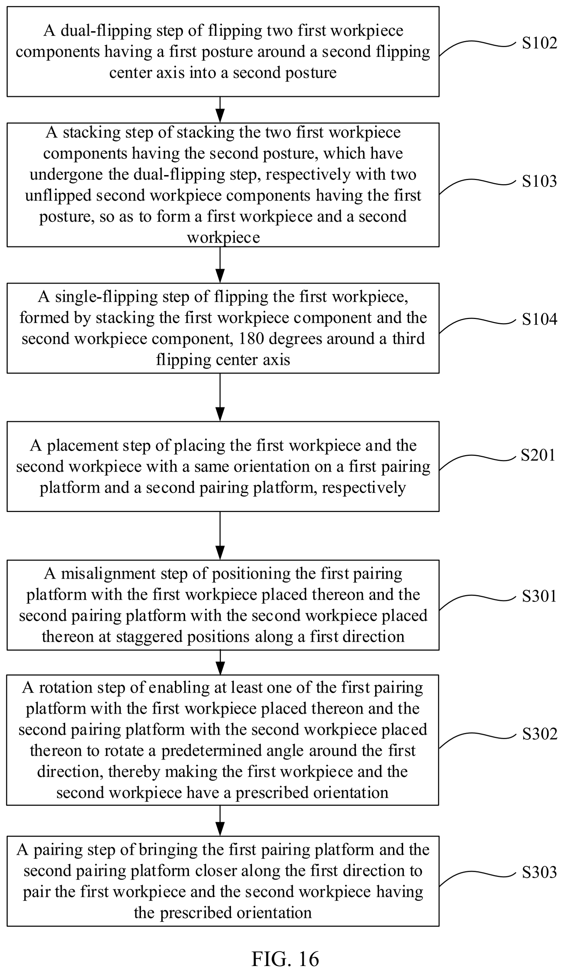

FIG. 1 is a front view of a misalignment pairing apparatus provided by some embodiments of this disclosure; FIG. 2 is a three-dimensional structural diagram of the structure of a misalignment pairing apparatus provided by some embodiments of this disclosure; FIG. 3 is a schematic diagram showing posture changes of a first workpiece and a second workpiece during a pairing process of a pairing device provided by some embodiments of this disclosure; FIG. 4 is a three-dimensional structural diagram of the structure of a dual-flip pairing apparatus provided by some embodiments of this disclosure; FIG. 5 is a top view of a dual-flip pairing apparatus provided by some embodiments of this disclosure; FIG. 6 is a three-dimensional structural diagram of the structure of a single-flip pairing apparatus provided by some embodiments of this disclosure; FIG. 7 is a top view of a single-flip pairing apparatus provided by some embodiments of this disclosure; FIG. 8 is a top view of a pairing device provided by some embodiments of this disclosure; FIG. 9 is a schematic diagram showing posture changes of a first workpiece component, a second workpiece component, a first workpiece, and a second workpiece during another pairing process of a pairing device provided by some embodiments of this disclosure; FIG. 10 is a flowchart of a first pairing method provided by some embodiments of this disclosure; FIG. 11 is a flowchart of a second pairing method provided by some embodiments of this disclosure; FIG. 12 is a flowchart of a third pairing method provided by some embodiments of this disclosure; FIG. 13 is a flowchart of a fourth pairing method provided by some embodiments of this disclosure; FIG. 14 is a schematic diagram showing posture changes of a first workpiece and a second workpiece during yet another pairing process of a pairing device provided by some embodiments of this disclosure; FIG. 15 is a flowchart of a sixth pairing method provided by some embodiments of this disclosure; and FIG. 16 is a flowchart of a seventh pairing method provided by some embodiments of this disclosure.

In some embodiments of this disclosure, for ease of description, a first direction, a second direction, and a third direction are defined. The first direction, the second direction, and the third direction are directions intersecting each other, where intersecting each other includes being perpendicular to each other. For ease of understanding the embodiments of this disclosure, in the embodiments shown in FIG. 1 to FIG. 16, the first direction, the second direction, and the third direction being directions perpendicular to each other is used as an example for description, but those skilled in the art should understand that the embodiments of this disclosure are not limited to the case where these three directions are perpendicular to each other. For ease of description, as indicated by the arrows in FIG. 1, FIG. 2, FIG. 4, FIG. 6 to FIG. 8, the direction of arrow Z is the first direction, the direction of arrow X is the second direction, and the direction of arrow Y is the third direction. Sometimes, the direction indicated by arrow Z along the first direction is referred to as "upward," and the opposite direction is referred to as "downward."

As shown in FIG. 1 to FIG. 3, this disclosure provides a pairing device. The pairing device is configured to pair a first workpiece 100 and a second workpiece 200 in a prescribed orientation, and the pairing device includes a misalignment pairing apparatus 1. The misalignment pairing apparatus 1 includes a first positioning mechanism 11 and a second positioning mechanism 12. The first positioning mechanism 11 has a first pairing platform 111 for placing the first workpiece 100; and the second positioning mechanism 12 has a second pairing platform 121 for placing the second workpiece 200. The first positioning mechanism 11 and the second positioning mechanism 12 are configured to enable at least one of the first pairing platform 111 and the second pairing platform 121 to move along a first direction Z, and enable at least one of the first pairing platform 111 and the second pairing platform 121 to rotate around the first direction Z. The first workpiece 100 and the second workpiece 200 are enabled to have the prescribed orientation by positioning the first pairing platform 111 and the second pairing platform 121 at staggered positions along the first direction Z, and rotating at least one of the first pairing platform 111 and the second pairing platform 121 around the first direction Z. The first pairing platform 111 and the second pairing platform 121 are brought closer along the first direction Z to pair the first workpiece 100 and the second workpiece 200 having the prescribed orientation.

In the production and manufacturing process of products such as batteries, it is necessary to pair at least two jelly rolls within a battery cell in a prescribed orientation to facilitate subsequent processes such as electrical connection between the jelly rolls and encasement. In the embodiments of this disclosure, the prescribed orientation includes the direction in which the tabs of at least two jelly rolls extend facing each other, and pairing includes at least partial overlapping and abutting of the tabs of the at least two jelly rolls. The pairing device of the embodiments of this disclosure is a device capable of achieving pairing actions.

In some embodiments of this disclosure, as shown in FIG. 3 and FIG. 9, the first workpiece 100 and the second workpiece 200 may include, for example, a jelly roll, a cell group composed of two or more jelly rolls, or the like. Certainly, in some other embodiments, the first workpiece 100 and the second workpiece 200 may also include other workpieces requiring pairing. The first workpiece 100 and the second workpiece 200 may be jelly rolls as shown in FIG. 3, or may be cell groups composed of two jelly rolls as shown in FIG. 9. Certainly, whether jelly rolls or cell groups, they are not limited to the forms shown in FIG. 3 and FIG. 9.

In the embodiments of this disclosure, a jelly roll is the main component for electrochemical reactions within a battery cell, the jelly roll is primarily formed by winding or stacking a positive electrode plate and a negative electrode plate, and typically having a separator disposed between the positive electrode plate and the negative electrode plate. The battery cell primarily relies on the movement of metal ions between the positive electrode plate and the negative electrode plate to operate. The positive electrode plate includes a positive electrode current collector and a positive electrode active substance layer. The positive electrode active substance layer is applied on a surface of the positive electrode current collector. The positive electrode current collector includes a positive electrode current collecting part and a positive electrode protrusion protruding from the positive electrode current collecting part. The positive electrode current collecting part is coated with the positive electrode active substance layer, at least part of the positive electrode protrusion is uncoated with the positive electrode active substance layer, and the positive electrode protrusion is used as a positive electrode tab. Taking a lithium-ion battery as an example, the material of the positive electrode current collector may be aluminum, the positive electrode active substance layer includes a positive electrode active substance, and the positive electrode active substance may be lithium cobalt oxide, lithium iron phosphate, ternary lithium, or lithium manganate, or the like. The negative electrode plate includes a negative electrode current collector and a negative electrode active substance layer. The negative electrode active substance layer is applied on a surface of the negative electrode current collector. The negative electrode current collector includes a negative electrode current collecting part and a negative electrode protrusion protruding from the negative electrode current collecting part. The negative electrode current collecting part is coated with the negative electrode active substance layer, at least part of the negative electrode protrusion is uncoated with the negative electrode active substance layer, and the negative electrode protrusion is used as a negative electrode tab. The positive electrode current collecting part, the negative electrode current collecting part, and the separator between the positive electrode current collecting part and the negative electrode current collecting part form the main body of an electrode assembly. The material of the negative electrode current collector may be copper, the negative electrode active substance layer includes a negative electrode active substance, and the negative electrode active substance may be carbon or silicon, or the like. To ensure the passage of large currents without fusing, the number of positive electrode tabs is multiple and stacked together, and the number of negative electrode tabs is multiple and stacked together. The material of the separator may be PP (polypropylene, polypropylene) or PE (polyethylene, polyethylene), or the like. In addition, the electrode assembly may be a wound structure or a stacked structure. However, the embodiments of this disclosure are not limited thereto.

Both the first positioning mechanism 11 and the second positioning mechanism 12 may enable their respective pairing platforms to move linearly along the first direction Z and rotate around the first direction Z. Alternatively, one of the two may enable the pairing platform to move linearly along the first direction Z while the other enables the pairing platform to rotate around the first direction Z. Alternatively, one of the two may enable the pairing platform to move linearly along the first direction Z and rotate around the first direction Z, while the other enables the pairing platform to move linearly along the first direction Z or rotate around the first direction Z.

For example, the first positioning mechanism 11 can enable the first pairing platform 111 to reciprocate along the first direction Z, the position of the second pairing platform 121 along the first direction Z remains unchanged, and the second positioning mechanism 12 can enable the second pairing platform 121 to rotate around the first direction Z. Alternatively, the second pairing platform 121 can enable the second pairing platform 121 to reciprocate along the first direction Z, the position of the first positioning mechanism 11 along the first direction Z remains unchanged, and the first positioning mechanism 11 can enable the first pairing platform 111 to rotate around the first direction Z. Alternatively, the first positioning mechanism 11 can enable the first pairing platform 111 to reciprocate along the first direction Z and rotate around the first direction Z, while the position of the second pairing platform 121 along the first direction Z remains unchanged and does not rotate. Alternatively, the second positioning mechanism 12 can enable the second pairing platform 121 to reciprocate along the first direction Z and rotate around the first direction Z, while the position of the first pairing platform 111 along the first direction Z remains unchanged and does not rotate.

When pairing the first workpiece 100 and the second workpiece 200 by using the pairing device provided by the embodiments of this disclosure, the misalignment pairing apparatus 1 first positions the first pairing platform 111 and the second pairing platform 121 at staggered positions along the first direction Z, then enables at least one of the first pairing platform 111 and the second pairing platform 121 to rotate around the first direction Z to make the first workpiece 100 and the second workpiece 200 have the prescribed orientation; and finally, brings the first pairing platform 111 and the second pairing platform 121 closer along the first direction Z to pair the first workpiece 100 and the second workpiece 200 having the prescribed orientation are paired. In this way, pairing of the first workpiece 100 and the second workpiece 200 can be achieved. In addition, during the rotation process, since the two workpieces are staggered along the first direction Z, the spaces traversed by both or one of them during rotation do not overlap, meaning that the two workpieces do not interfere with each other. Moreover, during the processes of moving apart and moving closer, the two workpieces do not interfere with each other either. Therefore, the likelihood of the two workpieces coming into contact during the pairing process can be reduced, thereby improving the integrity of the two workpieces. Thus, when the pairing device is applied to pair jelly rolls, no contact occurs between the jelly rolls during the pairing process of the jelly rolls, reducing the likelihood of damaging tabs and thereby improving the integrity of the tabs.

For example, as shown in FIG. 3, (a) to (d) in FIG. 3 respectively illustrate the postures of the first workpiece 100 and the second workpiece 200 at various states during the pairing process. In FIG. 3, (a) is divided into two parts in the vertical direction of the figure: the upper part is a top view of the first workpiece 100 and the second workpiece 200, and the lower part is a front view of the first workpiece 100 and the second workpiece 200. Similarly, the illustrations in (b) to (d) of FIG. 3 are similar, with the upper part being a top view of the first workpiece 100 and the second workpiece 200, and the lower part being a front view of the first workpiece 100 and the second workpiece 200. When the first workpiece 100 and the second workpiece 200 are respectively placed on the first bearing surface and the second bearing surface, they are in the state shown in (a) of FIG. 3, where the first workpiece 100 and the second workpiece 200 have the same height position along the first direction Z and the same orientation. Next, the first positioning mechanism 11 causes the first pairing platform 111 to move a set distance along the first direction Z, bringing the first workpiece 100 and the second workpiece 200 to the state shown in (b) of FIG. 3, where the first workpiece 100 and the second workpiece 200 are staggered along the first direction Z. Then, the second positioning mechanism 12 causes the second pairing platform 121 to rotate 180 degrees around the first direction Z, bringing the first workpiece 100 and the second workpiece 200 to the state shown in (c) of FIG. 3, where the tabs of the first workpiece 100 and the second workpiece 200 protrude from the sides facing each other along the second direction X. Finally, the first positioning mechanism 11 causes the first pairing platform 111 to move closer to the second pairing platform 121 along the first direction Z until the first workpiece 100 and the second workpiece 200 reach the state shown in (d) of FIG. 3, where the first workpiece 100 and the second workpiece 200 are paired.

In some embodiments of this disclosure, the first pairing platform 111 has a first bearing surface perpendicular to the first direction Z, the first bearing surface is configured to support the first workpiece 100 from one side of the first workpiece 100 along the first direction Z; the second pairing platform 121 has a second bearing surface perpendicular to the first direction Z, the second bearing surface is configured to support the second workpiece 200 from one side of the second workpiece 200 along the first direction Z.

The first pairing platform 111 and the second pairing platform 121 bear and move the workpieces through support, eliminating the need to use mechanical grippers to grasp and move the workpieces, thus simplifying the structure of the pairing device.

In some embodiments of this disclosure, the first positioning mechanism 11 includes a first mounting frame 113 and the first pairing platform 111 mounted on the first mounting frame 113, a first linear drive apparatus 112 is mounted on the first mounting frame 113, and the first pairing platform 111 is capable of reciprocating along the first direction Z under the drive of the first linear drive apparatus 112; and the second positioning mechanism 12 includes a second mounting frame 123 and the second pairing platform 121 mounted on the second mounting frame 123, a rotary drive apparatus 122 is mounted on the second mounting frame 123, and the second pairing platform 121 is capable of rotating at least 180 degrees around the first direction Z under the drive of the rotary drive apparatus 122.

The first linear drive apparatus 112 drives the first pairing platform 111 to move away from the second pairing platform 121 along the first direction Z, enabling the first workpiece 100 to move away from the second workpiece 200 along the first direction Z. When the first pairing platform 111 moves to a position staggered along the first direction Z relative to the second pairing platform 121, it stops, making the first workpiece 100 and the second workpiece 200 staggered along the first direction Z. Then, the rotary drive apparatus 122 drives the second pairing platform 121 to rotate a predetermined angle around the first direction Z, enabling the second workpiece 200 to rotate the predetermined angle, so that the first workpiece 100 and the second workpiece 200 have the prescribed orientation. Subsequently, the first linear drive apparatus 112 drives the first pairing platform 111 to move closer to the second pairing platform 121 along the first direction Z until the first workpiece 100 and the second workpiece 200 reach a paired state.

This achieves the misalignment of the first workpiece 100 and the second workpiece 200 along the first direction Z, the rotation of the second workpiece 200 around the first direction Z, and the movement of the first workpiece 100 and the second workpiece 200 closer to each other, thereby realizing the pairing of the workpieces. Moreover, the first linear drive apparatus 112 and the rotary drive apparatus 122 are respectively provided in the first positioning mechanism 11 and the second positioning mechanism 12, rather than being mounted in the same positioning mechanism, making the mounting structure relatively simple and the space occupation within the two positioning mechanisms more balanced, which helps reduce the overall volume of the misalignment pairing apparatus 1. Additionally, the actions of linear driving and rotary driving are independent of each other and do not interfere, ensuring smooth execution of each step of the pairing process and improving the pairing effect.

In some embodiments of this disclosure, the first pairing platform 111 includes a first bearing plate 1111, a first positioning block 1112, and a second positioning block 1113. The first bearing plate 1111 provides the first bearing surface, and the first bearing plate 1111 is connected to an output end of the first linear drive apparatus 112. The first positioning block 1112 is movably disposed on the first bearing plate 1111 along a second direction X, and the first positioning block 1112 is capable of moving to a position abutting the first workpiece 100. The second positioning block 1113 is movably disposed on the first bearing plate 1111 along a third direction Y, and the second positioning block 1113 is capable of moving to a position abutting the first workpiece 100. The first direction Z, the second direction X, and the third direction Y are pairwise perpendicular.

For example, first positioning blocks 1112 are provided on opposite sides of the first bearing surface along the second direction X, and the first positioning blocks 1112 are capable of abutting the first workpiece 100 from opposite sides along the second direction X. Second positioning blocks 1113 are provided on opposite sides of the first bearing surface along the third direction Y, and the second positioning blocks 1113 are capable of abutting the first workpiece 100 from opposite sides along the third direction Y, thus reliably restricting the position of the first workpiece 100 on the first bearing surface.

The first linear drive apparatus 112 may be, but is not limited to, a linear cylinder or a linear motor.

The first workpiece 100 is placed on the first bearing surface of the first bearing plate 1111, and the first positioning block 1112 and the second positioning block 1113 abut the first workpiece 100 from the second direction X and the third direction Y, respectively, stably restricting the position of the first workpiece 100 to facilitate subsequent linear movement or rotation actions.

In some embodiments of this disclosure, the first positioning block 1112 and the second positioning block 1113 are respectively connected to a first positioning drive apparatus 1114, the first positioning drive apparatus 1114 is configured to drive the first positioning block 1112 and the second positioning block 1113 to move. The first positioning drive apparatus 1114 may include, but is not limited to, a linear motor or a linear cylinder.

In some embodiments of this disclosure, the second pairing platform 121 includes a second bearing plate 1211, a third positioning block 1212, and a fourth positioning block 1213. The second bearing plate 1211 provides the second bearing surface, and the second bearing plate is connected to an output end of the rotary drive apparatus 122. The third positioning block 1212 and the fourth positioning block 1213 are movably disposed on the second bearing plate 1211 along directions perpendicular to the first direction Z, and the third positioning block 1212 and the fourth positioning block 1213 are capable of moving to positions abutting the second workpiece 200, where a movement direction of the third positioning block 1212 and a movement direction of the fourth positioning block 1213 are perpendicular to each other.

For example, third positioning blocks 1212 are provided on two sides of the second bearing surface along the movement direction of the third positioning block 1212, and the third positioning blocks 1212 are capable of abutting the second workpiece 200 from opposite sides. Fourth positioning blocks 1213 are provided on both sides of the second bearing surface along the movement direction of the fourth positioning block 1213, and the fourth positioning blocks 1213 are capable of abutting the second workpiece 200 from opposite sides, thus reliably restricting the position of the second workpiece 200 on the second bearing surface.

The rotary drive apparatus 122 may be, but is not limited to, a rotary cylinder or a rotary motor.

The second workpiece 200 is placed on the second bearing surface of the second bearing plate 1211, and the third positioning block 1212 and the fourth positioning block 1213 abut the second workpiece 200 from two perpendicular directions, with the movement directions of the third positioning block 1212 and the fourth positioning block 1213 both being perpendicular to the first direction Z, thereby stably restricting the position of the second workpiece 200 to facilitate subsequent linear movement or rotation actions.

In some embodiments of this disclosure, the third positioning block 1212 and the fourth positioning block 1213 are respectively connected to a second positioning drive apparatus 1214, the second positioning drive apparatus 1214 is configured to drive the third positioning block 1212 and the fourth positioning block 1213 to move. The second positioning drive apparatus 1214 may include, but is not limited to, a linear motor or a linear cylinder.

In some embodiments of this disclosure, the first positioning mechanism 11 and the second positioning mechanism 12 are configured to further enable the first pairing platform 111 and the second pairing platform 121 to move closer to or away from each other along a second direction X, where the second direction X is perpendicular to the first direction Z.

Both the first pairing platform 111 and the second pairing platform 121 may be movable along the second direction X, or one of the two may be movable along the second direction X while the position of the other along the second direction X remains unchanged.

In the case where the first pairing platform 111 is movable along the second direction X, the first pairing platform 111 may be movable relative to the first mounting frame 113 along the second direction X, or the first mounting frame 113 may be movable relative to a part bearing the first mounting frame 113 along the second direction X. In the case where the second pairing platform 121 is movable along the second direction X, the second pairing platform 121 may be movable relative to the second mounting frame 123 along the second direction X, or the second mounting frame 123 may be movable relative to a part bearing the second mounting frame 123 along the second direction X, thus enabling the first pairing platform 111 and the second pairing platform 121 to move closer to or away from each other along the second direction X.

Before rotating around the first direction Z, the first pairing platform 111 and the second pairing platform 121 can be moved away from each other along the second direction X to increase the spacing between the first workpiece 100 and the second workpiece 200 along the second direction X. In this way, during the rotation of the first workpiece 100 or the second workpiece 200 around the first direction Z, interference is less likely to occur, further reducing the likelihood of workpiece damage.

In some embodiments of this disclosure, the first mounting frame 113 of the first positioning mechanism 11 is mounted on a first guide rail 1151 extending along the second direction X and configured to be capable of sliding along the first guide rail 1151.

The first mounting frame 113 is equipped with a first slider 1152, and the first slider 1152 is slidably engaged with the first guide rail 1151, achieving a sliding connection between the first mounting frame 113 and the first guide rail 1151.

In this way, the first mounting frame 113 is movable relative to the first guide rail 1151 along the second direction X, enabling the first pairing platform 111 mounted on the first mounting frame 113 to move along the second direction X, thereby allowing the first pairing platform 111 and the second pairing platform 121 to move closer to or away from each other along the second direction X. Moreover, the first guide rail 1151 serves as a sliding guide, improving the smoothness of the sliding of the first positioning mechanism 11.

In some embodiments of this disclosure, the misalignment pairing apparatus 1 includes a base 13, and the second mounting frame 123 of the second positioning mechanism 12 is fixedly disposed on the base 13; and the first guide rail 1151 is fixedly mounted on the base 13, the first guide rail 1151 is provided with a second linear drive apparatus 114, the first mounting frame 113 is connected to an output end of the second linear drive apparatus 114, and the first mounting frame 113 is capable of reciprocating along the second direction X under the drive of the second linear drive apparatus 114, thereby enabling the first pairing platform 111 to move closer to or away from the second pairing platform 121.

The second linear drive apparatus 114 may be, but is not limited to, a linear cylinder or a linear motor.

In this way, the first pairing platform 111 is enabled to move closer to or away from the second pairing platform 121, thereby adjusting the spacing between the first workpiece 100 and the second workpiece 200 in the second direction X. The first positioning mechanism 11 and the second positioning mechanism 12 are both disposed on the base 13, forming an integral unit, facilitating the overall assembly and disassembly of the misalignment pairing apparatus 1.

In some embodiments of this disclosure, the first workpiece 100 includes at least one first jelly roll, and the first jelly roll has a protruding first tab; the second workpiece 200 includes at least one second jelly roll, and the second jelly roll has a protruding second tab; the prescribed orientation includes: along a second direction X perpendicular to the first direction Z, the first tab of the first jelly roll protruding from a side facing towards the second jelly roll, and the second tab of the second jelly roll protruding from a side facing towards the first jelly roll; and the pairing includes the first tab and the second tab of the first jelly roll and the second jelly roll that have the prescribed orientation having portions overlapping and abutting along the first direction Z.

"The first tab and the second tab having portions overlapping and abutting along the first direction Z" means that a portion of the surface of the first tab perpendicular to the first direction Z and a portion of the surface of the second tab perpendicular to the first direction Z are in contact with each other, achieving electrical connection between the first tab and the second tab, completing the pairing of the first jelly roll and the second jelly roll.

For example, as shown in FIG. 3, the first workpiece 100 and the second workpiece 200 in the figure are illustrated using jelly rolls, each jelly roll in the figure including a main body and two tabs protruding from the same side of the main body. In (c) and (d) of FIG. 3, the first jelly roll and the second jelly roll have the prescribed orientation, that is, the sides of the first jelly roll and the second jelly roll with tabs are facing each other. In (d) of FIG. 4, the first jelly roll and the second jelly roll have portions overlapping and abutting along the first direction Z.

In this way, the pairing device provided by the embodiments of this disclosure is applied to pair at least two jelly rolls, ensuring that no contact occurs between the jelly rolls during the pairing process of the jelly rolls, reducing the likelihood of damaging tabs, and thereby improving the integrity of the tabs.

In some embodiments of this disclosure, as shown in FIG. 1 and FIG. 2, the base 13 is slidably connected to a second guide rail 15 along the second direction X via a second slider 16, the second guide rail 15 is equipped with a third linear drive apparatus 14, and an output end of the third linear drive apparatus 14 is connected to the base 13 so as to configured to drive the base 13 to reciprocate relative to the second guide rail 15 along the second direction X.

The third linear drive apparatus 14 may be, but is not limited to, a linear cylinder or a linear motor.

In this way, it is convenient to adjust the relative positions of the first positioning mechanism 11 and the second positioning mechanism 12 with respect to other devices when the misalignment pairing apparatus 1 is used in conjunction with other devices, facilitating cooperative operations.

In some embodiments of this disclosure, as shown in FIG. 4 and FIG. 5, the pairing device further includes a dual-flip pairing apparatus 2, and the dual-flip pairing apparatus 2 is configured to perform a dual-flip operation and a dual-lowering operation, where the dual-flip operation includes simultaneously flipping two first workpiece components 1000 distributed along a second direction X perpendicular to the first direction Z around the second direction X; and the dual-lowering operation includes simultaneously moving the two first workpiece components 1000 along the first direction Z to first lowering positions, where the two first workpiece components 1000 moved to the first lowering positions are configured to be stacked respectively with two unflipped second workpiece components 2000, so as to form the first workpiece 100 and the second workpiece 200.

The first lowering position is a position along the movement path of the two first workpiece components 1000 along the first direction Z, and this position is relatively close to the two unflipped second workpiece components 2000. Moving the two first workpiece components 1000 to the first lowering position brings the two first workpiece components 1000 close to the two second workpiece components 2000, facilitating the stacking operation of stacking the two first workpiece components 1000 respectively with the two second workpiece components 2000. The first lowering position may be a position where the two first workpiece components 1000 are directly stacked onto the two second workpiece components 2000, or a position spaced apart from the two second workpiece components 2000. In the case where the first lowering position is spaced apart from the two second workpiece components 2000, a workpiece transfer apparatus such as a robotic arm may be configured to move the two second workpiece components 2000 to be stacked respectively onto the two first workpiece components 1000, or to move the two first workpiece components 1000 to be stacked respectively onto the two second workpiece components 2000.

For example, as shown in FIG. 8, a placement platform 4 for placing flipped first workpiece components 1000 and a workpiece transfer apparatus 5 for picking up workpieces are provided beside the dual-flip pairing apparatus 2. After the two first workpiece components 1000 are flipped, the two first workpiece components 100 are placed on the surface of the placement platform 4 in their flipped posture. Then, the workpiece transfer apparatus 5 picks up two unflipped second workpiece components 2000 from a workpiece conveyor line 6 and moves them to be stacked respectively with the two first workpiece components 1000, forming the first workpiece 100 and the second workpiece 200. The workpiece transfer apparatus 5 may be, but is not limited to, a robotic arm. Optionally, the flipped first workpiece components 1000 may be directly lowered onto the placement platform 4 by the dual-flip pairing apparatus 2, or lowered onto a bearing platform of the dual-flip pairing apparatus 2 itself, and then transferred to the placement platform 4 by the workpiece transfer apparatus 5. Certainly, the two unflipped second workpiece components 2000 may also be pre-placed on the placement platform 4, and after the dual-flip pairing apparatus 2 flips the two first workpiece components 1000, they are stacked respectively onto the two unflipped second workpiece components 2000, forming the first workpiece 100 and the second workpiece 200.

In this way, the dual-flip pairing apparatus 2 flips the two first workpiece components 1000, enabling the two first workpiece components 1000 to be stacked with the two second workpiece components 2000 in a prescribed posture, forming the first workpiece 100 and the second workpiece 200. The formation processes of the first workpiece 100 and the second workpiece 200 occur simultaneously, improving forming efficiency and battery production efficiency, while maintaining the relative positions between the two first workpiece components 1000, thereby enhancing the alignment accuracy of the first workpiece 100 and the second workpiece 200.

In some embodiments of this disclosure, the dual-flip pairing apparatus 2 includes a first base frame 21, a dual-lowering drive apparatus 22, and a dual-flip mechanism 23. The dual-lowering drive apparatus 22 is mounted on the first base frame 21; the dual-flip mechanism 23 is connected to an output end of the dual-lowering drive apparatus 22, and the dual-flip mechanism 23 is configured to be capable of respectively clamping the two first workpiece components 1000 and performing the dual-flip operation. The dual-lowering drive apparatus 22 is capable of driving the dual-flip mechanism 23 to reciprocate along the first direction Z to perform the dual-lowering operation.

The dual-flip mechanism 23 first flips the two first workpiece components 1000, then simultaneously moves the flipped two first workpiece components 1000 along the first direction Z to the first lowering position, facilitating the subsequent stacking operation of the two flipped first workpiece components 1000 with the two unflipped second workpiece components 2000.

The dual-lowering drive apparatus 22 may include, but is not limited to, a motor or a cylinder.

In this way, the dual-flip mechanism 23 flips and then lowers the two first workpiece components 1000, placing the flipped first workpiece components 1000 at positions close to the second workpiece components 2000 to facilitate subsequent stacking operations. Moreover, the dual-flip mechanism 23 simultaneously flips the two first workpiece components 1000, and the dual-lowering drive apparatus 22 simultaneously moves the two first workpiece components 1000 along the first direction Z, helping maintain the relative positions of the two first workpiece components 1000 and improving the efficiency of workpiece pairing.

In some embodiments of this disclosure, the dual-flip mechanism 23 includes a dual-flip mounting frame 231, a dual-flip drive apparatus 232, and a dual-clamping assembly 233. The dual-flip mounting frame 231 is connected to an output end of the dual-lowering drive apparatus 22; the dual-flip drive apparatus 232 is mounted on the dual-flip mounting frame 231; and the dual-clamping assembly 233 is connected to an output end of the dual-flip drive apparatus 232. The dual-clamping assembly 233 is configured to be capable of simultaneously clamping the two first workpiece components 1000. The dual-flip drive apparatus 232 is capable of driving the dual-clamping assembly 233 to flip around the second direction X to perform the dual-flip operation.

When performing the dual-flip operation, first, the dual-clamping assembly 233 clamps the two first workpiece components 1000, then the dual-lowering drive apparatus 22 drives the dual-flip mounting frame 231 to move along the first direction Z, thereby enabling the two first workpiece components 1000 clamped by the dual-clamping assembly 233 to move along the first direction Z to a flipping position and then stop. Next, the dual-flip drive apparatus 232 drives the dual-clamping assembly 233 to flip around the second direction X, thereby enabling the two first workpiece components 1000 to flip around the second direction X, stopping after flipping a predetermined angle, so that the two first workpiece components 1000 assume a predetermined posture.

In this way, the dual-flip mechanism 23 is enabled to perform the dual-flip operation. Moreover, the two first workpiece components 1000 are simultaneously clamped by the dual-clamping assembly 233, and when the dual-flip drive apparatus 232 drives the dual-clamping assembly 233 to flip, the two first workpiece components 1000 are flipped simultaneously, helping maintain the relative positions of the two first workpiece components 1000 and improving the efficiency of workpiece pairing.

In some embodiments of this disclosure, as shown in FIG. 4, the first base frame 21 is equipped with a third guide rail 241 extending along the first direction Z, the dual-flip mounting frame 231 is equipped with a third slider 242, and the third slider 242 is slidably connected to the third guide rail 241.

In this way, the provision of the third guide rail 241 and the third slider 242 improves the stability of the movement of the dual-flip mounting frame 231 relative to the first base frame 21 along the first direction Z.

In some embodiments of this disclosure, the dual-clamping assembly 233 includes two first clamping mechanisms spaced apart along the second direction X, and the first clamping mechanism includes a first clamping mounting frame 2331 and two first clamping structures 2332. The first clamping mounting frame 2331 is connected to an output end of the dual-flip drive apparatus 232. The two first clamping structures 2332 are respectively connected to the first clamping mounting frame 2331, and the two first clamping structures 2332 are disposed opposite and configured to respectively clamp opposite ends of the first workpiece component 1000.

For example, the first clamping structure 2332 includes two clamping jaws, one end of the first workpiece component 1000 is clamped between the two clamping jaws of the first clamping structure 2332, and each of the opposite ends of the first workpiece component 1000 is clamped by one first clamping structure 2332, enabling stable clamping of the first workpiece component 1000. The first clamping structure 2332 includes, but is not limited to, a clamping cylinder.

In this way, the stability of the dual-clamping assembly 233 in clamping the two first workpiece components 1000 is improved, ensuring smooth execution of the dual-flip operation.

For example, the two first clamping mechanisms are respectively disposed on opposite sides of the dual-flip mounting frame 231 along the second direction X, the first clamping mounting frames 2331 of the two first clamping mechanisms and the dual-flip mounting frame 231 are connected via a rotating shaft extending along the second direction X, the rotating shaft is rotatably connected to the dual-flip mounting frame 231 around its own central axis, and the first clamping mounting frames 2331 of the two first clamping mechanisms are capable of synchronously rotating with the rotation of the rotating shaft. The dual-flip drive apparatus 232 is drivingly connected to the rotating shaft, driving the rotating shaft to rotate to cause the two first clamping mechanisms to synchronously rotate, thereby achieving synchronous flipping.

In some embodiments of this disclosure, the first clamping mounting frame 2331 includes a first mounting block 23311, a first movable arm drive apparatus 23313, and two first movable arms 23312 respectively connected to the first mounting block 23311, the two first clamping structures 2332 are connected to the two first movable arms 23312 in a one-to-one correspondence, and the first movable arm drive apparatus 23313 is mounted on the first mounting block 23311 and capable of driving the two first movable arms 23312 to move closer to or away from each other.

When the first movable arm drive apparatus 23313 drives the two first movable arms 23312 to move closer to each other, the opposite ends of the first workpiece component 1000 can be respectively clamped in the two first clamping structures 2332. When the first movable arm drive apparatus 23313 drives the two first movable arms 23312 to move away from each other, the opposite ends of the first workpiece component 1000 can be released from the gaps between the clamping jaws of the two first clamping structures 2332, thereby enabling the operation of removing the first workpiece component 1000 from the dual-clamping assembly 233.

Certainly, when loading and unloading first workpiece components 1000 of the same size, the spacing between the two first movable arms 23312 may not need to be adjusted. By opening the two clamping jaws of each first clamping structure 2332 of the first clamping mechanism to release the clamping of the first workpiece component 1000, a pickup device such as a robotic arm can then remove the first workpiece component 1000 from between the clamping jaws. During installation, the spacing between the two clamping jaws of each first clamping structure 2332 can be adjusted to a larger size, a pickup device can deliver the first workpiece component 1000 into the gap between the two clamping jaws of each first clamping structure 2332, and then the two clamping jaws of each first clamping structure 2332 can be clamped, thereby achieving the loading and unloading of the first workpiece component 1000.

Additionally, the first movable arm drive apparatus 23313 driving the two first movable arms 23312 to move closer to or away from each other can accommodate clamping first workpiece components 1000 of different sizes along the spacing direction of the two first movable arms 23312, improving the compatibility of workpiece pairing.

In this way, moving the two first movable arms 23312 closer to or away from each other can improve the compatibility with to-be-clamped workpieces and offer more loading and unloading methods, simplifying the loading and unloading steps.

In some embodiments of this disclosure, as shown in FIG. 4 and FIG. 5, the pairing device further includes a single-flip pairing apparatus 3, the single-flip pairing apparatus 3 is configured to be capable of performing a single-flip operation and a single-lowering operation to adjust the first workpiece 100 and the second workpiece 200 that are paired by the dual-flip pairing apparatus 2 into a mutually upside-down posture, where the single-flip operation includes flipping the first workpiece 100 around the second direction X; the single-lowering operation includes moving the flipped first workpiece 100 along the first direction Z to a second lowering position, so that the flipped first workpiece 100 and an unflipped second workpiece 200 are in a mutually upside-down posture, and the first workpiece 100 and the second workpiece 200 in the mutually upside-down posture are capable of being adjusted by the misalignment pairing apparatus 1 to pair in the prescribed orientation.

The second lowering position is a position in the movement path of the first workpiece 100 along the first direction Z. This position is relatively close to the two unflipped second workpieces 200. Moving the first workpiece 100 to the second lowering position brings the first workpiece 100 close to the second workpiece 200, facilitating subsequent pairing operations of the two.

The single-flip pairing apparatus 3 flips the first workpiece 100, making the first workpiece 100 and the second workpiece 200 in a mutually upside-down posture, facilitating subsequent further adjustments to the first workpiece 100 and the second workpiece 200 by the misalignment pairing apparatus 1, advancing the workpiece pairing process.

In some embodiments of this disclosure, as shown in FIG. 4 and FIG. 5, the single-flip pairing apparatus 3 includes a second base frame 31, a single-lowering drive apparatus 32, and a single-flip mechanism 33. The single-lowering drive apparatus 32 is mounted on the second base frame 31; the single-flip mechanism 33 is connected to an output end of the single-lowering drive apparatus 32, the single-flip mechanism 33 is configured to be capable of clamping the first workpiece 100 and performing the single-flip operation, and the single-lowering drive apparatus 32 is capable of driving the single-flip mechanism 33 to reciprocate along the first direction Z to perform the single-lowering operation.

The single-flip mechanism 33 clamps the first workpiece 100, the single-lowering drive apparatus 32 drives the single-flip mechanism 33 to move upward along the first direction Z to a flipping position, the single-flip mechanism 33 causes the first workpiece 100 to flip a predetermined angle around the second direction X, making the first workpiece 100 assume a predetermined posture, then the single-lowering drive apparatus 32 drives the single-flip mechanism 33 to move downward along the first direction Z to the second lowering position, so that the flipped first workpiece 100 and the unflipped second workpiece 200 are in a mutually upside-down posture.

In this way, the single-flip pairing apparatus 3 is enabled to perform the single-flip operation and the single-lowering operation on the first workpiece 100, making the first workpiece 100 and the second workpiece 200 in a mutually upside-down posture, facilitating subsequent further adjustments to the first workpiece 100 and the second workpiece 200 by the misalignment pairing apparatus 1, advancing the workpiece pairing process.

In some embodiments of this disclosure, the single-flip mechanism 33 includes a single-flip mounting frame 331, a single-flip drive apparatus 332, and a single-clamping assembly 333. The single-flip mounting frame 331 is connected to an output end of the single-lowering drive apparatus 32; the single-flip drive apparatus 332 is mounted on the single-flip mounting frame 331; the single-clamping assembly 333 is connected to an output end of the single-flip drive apparatus 332, the single-clamping assembly 333 is configured to be capable of clamping the first workpiece 100, and the single-flip drive apparatus 332 is capable of driving the single-clamping assembly 333 to rotate around the second direction X to perform the single-flip operation.

When performing the single-flip operation, first, the single-clamping assembly 333 clamps the first workpiece 100, then the single-lowering drive apparatus 32 drives the single-clamping assembly 333 to move along the first direction Z, thereby enabling the first workpiece 100 clamped by the single-clamping assembly 333 to move along the first direction Z to a flipping position and then stop. Next, the single-flip drive apparatus 332 drives the single-clamping assembly 333 to flip around the second direction X, thereby enabling the first workpiece 100 to flip around the second direction X, stopping after flipping a predetermined angle, so that the two first workpieces 100 assume a predetermined posture.

In this way, the single-flip mechanism 33 is enabled to perform the single-flip operation, making the first workpiece 100 assume a predetermined posture, so that the flipped first workpiece 100 and the unflipped second workpiece 200 are in a mutually upside-down posture, facilitating subsequent further adjustments to the first workpiece 100 and the second workpiece 200 by the misalignment pairing apparatus 1, advancing the workpiece pairing process.

In some embodiments of this disclosure, as shown in FIG. 6, the second base frame 31 is equipped with a fourth guide rail 341 extending along the first direction Z, the single-flip mounting frame 331 is equipped with a fourth slider 342, the fourth slider 342 is slidably connected to the fourth guide rail 341.

In this way, the provision of the fourth guide rail 341 and the fourth slider 342 improves the stability of the movement of the single-flip mounting frame 331 relative to the second base frame 31 along the first direction Z.

In some embodiments of this disclosure, the single-clamping assembly 333 includes one second clamping mechanism, the second clamping mechanism includes a second clamping mounting frame 3331 and two second clamping structures 3332, and the second clamping mounting frame 3331 is connected to an output end of the single-flip drive apparatus 332. The two second clamping structures 3332 are both connected to the second clamping mounting frame 3331, and the two second clamping structures 3332 are disposed opposite to respectively clamp opposite ends of the first workpiece 100.

For example, the second clamping structure 3332 includes two clamping jaws, one end of the first workpiece 100 is clamped between the two clamping jaws of the second clamping structure 3332, each of the opposite ends of the first workpiece 100 is clamped by one second clamping structure 3332, enabling stable clamping of the first workpiece 100. The second clamping structure 3332 includes, but is not limited to, a clamping cylinder.

In this way, the stability of the single-clamping assembly 333 in clamping the first workpiece 100 is improved, ensuring smooth execution of the dual-flip operation.

In some embodiments of this disclosure, the second clamping mounting frame 3331 includes a second mounting block 33311, a second movable arm drive apparatus 33313, and two second movable arms 33312 respectively connected to the second mounting block 33311, the two second clamping structures 3332 is connected to the two second movable arms 33312 in a one-to-one correspondence, the second movable arm drive apparatus 33313 is mounted on the second mounting block 33311 and capable of driving the two second movable arms 33312 to move closer to or away from each other.

In some embodiments of this disclosure, the first workpiece component 1000 and the second workpiece component 2000 each include a jelly roll, and the first workpiece 100 and the second workpiece 200 each include a cell group composed of at least two jelly rolls.

In this way, the pairing device provided by the embodiments of this disclosure is applied to pair at least four jelly rolls, ensuring that no contact occurs between the jelly rolls during the pairing process of the jelly rolls, reducing the likelihood of damaging tabs, and thereby improving the integrity of the tabs.

In some embodiments, as shown in FIG. 8, the pairing device further includes a workpiece conveyor line 6, the dual-flip pairing apparatus 2, the single-flip pairing apparatus 3, and the misalignment pairing apparatus 1 is disposed beside the workpiece conveyor line 6 and arranged sequentially along the conveying direction of the workpiece conveyor line 6, the workpiece conveyor line 6 is configured to supply workpieces to the dual-flip pairing apparatus 2, the single-flip pairing apparatus 3, and the misalignment pairing apparatus 1 and to convey the workpieces output by each apparatus further downstream. When pairing two jelly rolls, the misalignment pairing apparatus 1 is used for pairing; when pairing four jelly rolls, the dual-flip pairing apparatus 2, the single-flip pairing apparatus 3, and the misalignment pairing apparatus 1 are used for pairing.

For example, as shown in FIG. 9, (a) to (f) in FIG. 9 respectively illustrate the postures of the first workpiece component 1000, the second workpiece component 2000, the first workpiece 100, and the second workpiece 200 at various states during the entire pairing process from the grouping of the first workpiece components 1000 and the second workpiece components 2000 to the pairing of the first workpiece 100 and the second workpiece 200. To facilitate showing the positional changes of each workpiece, (a) to (f) in FIG. 9 show top views and front views of the first workpiece component 1000, the second workpiece component 2000, the first workpiece 100, and the second workpiece 200. For example, in (a) of FIG. 9, the two diagrams labeled with the first workpiece 100 at the bottom left corner show the top view of the first workpiece 100 at the top and the front view of the first workpiece 100 at the bottom, and other parts in FIG. 9 are similar. In FIG. 9, the first workpiece component 1000 and the second workpiece component 2000 are illustrated using jelly rolls, and the first workpiece 100 and the second workpiece 200 are illustrated using structures composed of two jelly rolls. Each jelly roll in the figure includes a main body and two tabs protruding from the same side of the main body.

In this example, the two first workpiece components 1000 and the two second workpiece components 2000 have the same posture as shown in (a) of FIG. 9 before pairing. The two first workpiece components 1000 are flipped 180 degrees by the dual-flip pairing apparatus 2 to the posture shown in (b) of FIG. 9, while the two second workpiece components 2000 remain unflipped in their original posture. The two unflipped second workpiece components 2000 are respectively stacked onto the two flipped first workpiece components 1000, forming the first workpiece 100 and the second workpiece 200 as shown in (c) of FIG. 9. The first workpiece 100 is flipped 180 degrees by the single-flip pairing apparatus 3 to the posture shown in (d) of FIG. 9, while the second workpiece 200 remains unflipped, thus the first workpiece 100 and the second workpiece 200 are in a mutually upside-down posture. In this state, the tab orientations of the first workpiece 100 and the second workpiece 200 are the same, meaning that the first workpiece 100 and the second workpiece 200 have the same orientation. The first workpiece 100 and the second workpiece 200 are placed with this same orientation onto the first pairing platform 111 and the second pairing platform 121 of the misalignment pairing apparatus 1, respectively. Then, the first pairing platform 111 moves a set distance along the first direction Z, enabling the first workpiece 100 and the second workpiece 200 to be staggered. After the misalignment, the second pairing platform 121 rotates 180 degrees around the first direction Z, bringing the first workpiece 100 and the second workpiece 200 to the state shown in (e) of FIG. 9, where the first workpiece 100 and the second workpiece 200 have the prescribed orientation. Finally, the first pairing platform 111 moves closer to the second pairing platform 121 along the first direction Z until the first workpiece 100 and the second workpiece 200 reach the state shown in (f) of FIG. 9, where the first workpiece 100 and the second workpiece 200 are paired, completing the pairing of the four jelly rolls.

This disclosure also provides a pairing method using a pairing device to pair a first workpiece 100 and a second workpiece 200. The pairing device includes a first positioning mechanism 11 and a second positioning mechanism 12, the first positioning mechanism 11 has a first pairing platform 111; the second positioning mechanism 12 has a second pairing platform 121; the first positioning mechanism 11 and the second positioning mechanism 12 are configured to be capable of enabling at least one of the first pairing platform 111 and the second pairing platform 121 to move along a first direction Z, and capable of enabling at least one of the first pairing platform 111 and the second pairing platform 121 to rotate around the first direction Z.

As shown in FIG. 10, the pairing method includes:
S301: A misalignment step of positioning the first pairing platform with the first workpiece placed thereon and the second pairing platform with the second workpiece placed thereon at staggered positions along the first direction.
S302: A rotation step of enabling at least one of the first pairing platform with the first workpiece placed thereon and the second pairing platform with the second workpiece placed thereon to rotate a predetermined angle around the first direction, thereby making the first workpiece and the second workpiece have a prescribed orientation.
S303: A pairing step of bringing the first pairing platform and the second pairing platform closer along the first direction to pair the first workpiece and the second workpiece having the prescribed orientation.

In the rotation step, since the two workpieces are staggered along the first direction Z, the spaces traversed by both or one of them during rotation around the first direction Z do not overlap, meaning that the two workpieces do not interfere with each other. Moreover, in the misalignment and pairing steps, the two workpieces do not interfere with each other either. Therefore, the likelihood of the two workpieces coming into contact during the pairing process can be reduced, thereby improving the integrity of the two workpieces. Thus, when the pairing device is applied to pair jelly rolls, no contact occurs between the jelly rolls during the pairing process of the jelly rolls, reducing the likelihood of damaging tabs and thereby improving the integrity of the tabs.

In some embodiments of this disclosure, in the misalignment step, the first pairing platform 111 is moved along the first direction to a position staggered along the first direction Z relative to the second pairing platform 121; and/or
in the pairing step, the first pairing platform 111 is moved along the first direction Z to a position close to the second pairing platform 121 to pair the first workpiece 100 and the second workpiece 200.

In this way, the first positioning mechanism 11 causes the first pairing platform 111 to move along the first direction Z to perform the misalignment step and the pairing step. In these two steps, the second positioning mechanism 12 can keep the second pairing platform 121 stationary. This can reduce the number of drive apparatuses to save costs, and require fewer actions, thereby helping to improve the controllability of each step.

In some embodiments of this disclosure, as shown in FIG. 11, before the misalignment step, the method further includes: S201: A placement step of placing the first workpiece and the second workpiece with a same orientation on the first pairing platform and the second pairing platform, respectively; and in the rotation step, enabling the second pairing platform 121 with the second workpiece 200 placed thereon to rotate 180 degrees around the first direction, thereby making the first workpiece 100 and the second workpiece 200 have the prescribed orientation, where the prescribed orientation is that the first workpiece 100 and the second workpiece 200 have opposite orientations.

In this way, the pairing method can adjust two workpieces with the same orientation to opposite orientations to place them at predetermined relative positions, thereby enabling smooth pairing of the two workpieces.

In some embodiments of this disclosure, as shown in FIG. 12, the pairing method further includes:
S401: A first translation step of enabling the first pairing platform to move away from the second pairing platform along a second direction, where the second direction is perpendicular to the first direction.
S402: A second translation step of enabling the first pairing platform to move closer to the second pairing platform along the second direction, where
the first translation step is between the placement step and the misalignment step, and the second translation step is between the rotation step and the pairing step.

Before rotating around the first direction Z, the first pairing platform 111 and the second pairing platform 121 can be moved away from each other along the second direction X to increase the spacing between the first workpiece 100 and the second workpiece 200 along the second direction X. In this way, during the rotation of the first workpiece 100 or the second workpiece 200 around the first direction Z, interference is less likely to occur, further reducing the likelihood of workpiece damage.

In some embodiments of this disclosure, as shown in FIG. 13, before the misalignment step, the pairing method further includes:
S101: A flipping step of flipping the first workpiece having a first posture around a first flipping center axis into a second posture.
S201: A placement step of placing the first workpiece and the second workpiece with a same orientation on the first pairing platform and the second pairing platform, respectively, where the first workpiece has undergone the flipping step and has the second posture, and the second workpiece has not undergone flipping and has the first posture, and
in the rotation step, enabling the second pairing platform 121 with the second workpiece 200 placed thereon to rotate 180 degrees around the first direction, thereby making the first workpiece 100 and the second workpiece 200 have the prescribed orientation.

The first posture may be one in which one large face of a jelly roll faces one side of the first direction Z, for example, upward, and the opposite large face faces the other side of the first direction Z, for example, downward. The second posture may be a posture resulting from flipping 180 degrees around a flipping center axis relative to the first posture. The first flipping center axis may be the rotation axis of a clamp holding the first workpiece 100, such as a single jelly roll. The first flipping center axis may be located along the second direction X.

For example, as shown in FIG. 14, (a) to (e) in FIG. 14 respectively illustrate the postures of the first workpiece 100 and the second workpiece 200 at various states during the pairing process. In FIG. 14, (a) is divided into two parts in the vertical direction of the figure: the upper part is a top view of the first workpiece 100 and the second workpiece 200, and the lower part is a front view of the first workpiece 100 and the second workpiece 200. Similarly, the illustrations in (b) to (e) of FIG. 14 are similar, with the upper part is a top view of the first workpiece 100 and the second workpiece 200, and the lower part is a front view of the first workpiece 100 and the second workpiece 200. In FIG. 14, the first workpiece 100 and the second workpiece 200 are illustrated using jelly rolls, each jelly roll in the figure including a main body and two tabs protruding from the same side of the main body.

In this example, the first flipping center axis is located in the horizontal direction, the first direction Z is in the vertical direction, and both the first workpiece 100 and the second workpiece 200 are in the first posture as shown in (a) of FIG. 14 before pairing. After the first workpiece 100 is flipped around the first flipping center axis, it becomes the second posture as shown in (b) of FIG. 14, while the second workpiece 200 remains unflipped in the first posture. Next, the first workpiece 100 in the second posture and the second workpiece 200 in the first posture are placed on the first pairing platform 111 and the second pairing platform 121, respectively. At this point, the protruding orientations of the tabs of the two jelly rolls, as the first workpiece 100 and the second workpiece 200, are the same. Then, the first pairing platform 111 moves a set distance along the first direction Z, bringing the first workpiece 100 and the second workpiece 200 to the state shown in (c) of FIG. 14, where the first workpiece 100 and the second workpiece 200 are staggered along the first direction Z. Subsequently, the second pairing platform 121 rotates 180 degrees around the first direction Z, bringing the first workpiece 100 and the second workpiece 200 to the state shown in (d) of FIG. 14, where the tabs of the first workpiece 100 and the second workpiece 200 protrude from the sides facing each other along the second direction X. Finally, the first pairing platform 111 moves closer to the second pairing platform 121 along the first direction Z until the first workpiece 100 and the second workpiece 200 reach the state shown in (e) of FIG. 14, where the first workpiece 100 and the second workpiece 200 are paired.

In some embodiments of this disclosure, as shown in FIG. 15, before the misalignment step, the pairing method further includes:
S102: A dual-flipping step of flipping two first workpiece components having a first posture around a second flipping center axis into a second posture.
S103: A stacking step of stacking the two first workpiece components having the second posture, which have undergone the dual-flipping step, respectively with two unflipped second workpiece components having the first posture, so as to form a first workpiece and a second workpiece.

S201: A placement step of placing the first workpiece and the second workpiece with a same orientation on the first pairing platform and the second pairing platform, respectively, and
in the rotation step, enabling the second pairing platform 121 with the second workpiece 200 placed thereon to rotate 180 degrees around the first direction, thereby making the first workpiece 100 and the second workpiece 200 have the prescribed orientation.

The second flipping center axis may be a rotation axis of a clamp holding a single jelly roll of the first workpiece component 1000 used to form a jelly roll stack. The second flipping center axis is located along the second direction X.

In this way, the formation processes of the first workpiece 100 and the second workpiece 200 occur simultaneously, improving forming efficiency and battery production efficiency, while maintaining the relative positions between the two first workpiece components 1000, thereby enhancing the alignment accuracy of the first workpiece 100 and the second workpiece 200.

In some embodiments of this disclosure, as shown in FIG. 16, after the stacking step and before the placement step, the pairing method further includes:
S104: A single-flipping step of flipping the first workpiece, formed by stacking the first workpiece component and the second workpiece component, 180 degrees around a third flipping center axis, and
in the placement step, placing the first workpiece 100, flipped 180 degrees in the single-flipping step, on the first pairing platform 111.

The third flipping center axis may be the rotation axis of a clamp holding the first workpiece 100 formed by stacking, such as a stack of two jelly rolls.

The single-flip pairing apparatus 3 flips the first workpiece 100, making the first workpiece 100 and the second workpiece 200 in a mutually upside-down posture, facilitating subsequent further adjustments to the first workpiece 100 and the second workpiece 200 by the misalignment pairing apparatus 1, advancing the workpiece pairing process.

Below, specific examples of some embodiments of this disclosure are described with reference to the drawings.

As a specific example, for pairing two jelly rolls, a cell A (first workpiece 100) and a cell B (second workpiece 200) with the same orientation are placed on a pairing platform 1 (first pairing platform 111) and a pairing platform 2 (second pairing platform 121), respectively. Positioning cylinders (first positioning drive apparatus 1114, second positioning drive apparatus 1214) on the pairing platforms drive positioning blocks (first positioning block 1112, second positioning block 1113, third positioning block 1212, and fourth positioning block 1213) to position the AB cells. A pairing platform module 1 (first positioning mechanism 11) drives the pairing platform 1 to move away from the pairing platform 2, while a lifting cylinder (first linear drive apparatus 112) pushes the pairing platform 1 upward, so that the pairing platform 1 and the pairing platform 2 are not at the same height. After the pairing platform 1 moves into position, the pairing platform 2 rotates 180 degrees via a rotation device (rotary drive apparatus 122), and then the pairing platform 1 moves closer to the pairing platform 2. Once in position, the lifting cylinder descends, completing the pairing of the two jelly rolls.

As another specific example, for pairing four jelly rolls, the pairing steps are as follows:
Dual-flipping step: a dual-flip lifting module (dual-flip pairing apparatus 2) flips two cells A (first workpiece components 1000) with the same orientation 180 degrees. The dual-flip lifting module descends, opening-closing cylinders (first movable arm drive apparatus 23313) on a dual-flip gripper (dual-clamping assembly 233) close respectively, clamping cylinders (first clamping structure 2332) clamp the two cells A respectively, the dual-flip lifting module ascends, a dual-flip motor (dual-flip drive apparatus 232) drives the dual-flip gripper to flip the two cells A 180 degrees, the dual-flip lifting module descends, the clamping cylinders on the dual-flip gripper release the two cells A respectively, the opening-closing cylinders open respectively, the dual-flip lifting module ascends, and the flipping of the two cells A is completed.

Stacking step: two unflipped cells B (second workpiece components 2000) are stacked onto the two cells A via a robotic arm (workpiece transfer apparatus 5), forming a first cell group (first workpiece 100) and a second cell group (second workpiece 200).

Single-flipping step: a single-flip lifting module (single-flip pairing apparatus 3) flips the first cell group 180 degrees. The single-flip lifting module descends, opening-closing cylinders (first movable arm drive apparatus 23313) on a single-flip gripper (single-clamping assembly 333) close respectively, a clamping cylinder (second clamping structure 3332) clamps the first cell group, the single-flip lifting module ascends, a single-flip motor (single-flip drive apparatus 332) drives the single-flip gripper to flip the first cell group 180 degrees, the single-flip lifting module descends, the clamping cylinder on the single-flip gripper releases the first cell group, the opening-closing cylinders open respectively, the first cell group is placed down, the single-flip lifting module ascends, and the flipping of the first cell group is completed.

Pairing step: the first cell group (first workpiece 100) and the second cell group (second workpiece 200) with the same orientation are placed on a pairing platform 1 (first pairing platform 111) and a pairing platform 2 (second pairing platform 121), respectively. Positioning cylinders (first positioning drive apparatus 1114, second positioning drive apparatus 1214) on the pairing platforms drive positioning blocks (first positioning block 1112, second positioning block 1113, third positioning block 1212, and fourth positioning block 1213) to position the first cell group and the second cell group. A pairing platform module 1 (first positioning mechanism 11) drives the pairing platform 1 to move away from the pairing platform 2, while a lifting cylinder (first linear drive apparatus 112) pushes the pairing platform 1 upward, so that the pairing platform 1 and the pairing platform 2 are not at the same height. After the pairing platform 1 moves into position, the pairing platform 2 rotates 180 degrees via a rotation device (rotary drive apparatus 122), and then the pairing platform 1 moves closer to the pairing platform 2. Once in position, the lifting cylinder descends, completing the pairing of the first cell group and the second cell group.

Thus, the pairing of two workpieces is achieved in a relatively simple manner, and throughout the pairing process, the two workpieces do not interfere with each other, thereby reducing the likelihood of the two workpieces coming into contact during the pairing process and improving the integrity of the two workpieces. Therefore, during the pairing process of jelly rolls, no contact occurs between the jelly rolls, reducing the likelihood of damaging the tabs, thereby improving the integrity of the tabs and further enhancing the charge and discharge performance of the battery.

The above embodiments are merely used to illustrate the technical solutions of this disclosure and are not intended to limit them; although this disclosure has been described in detail with reference to the foregoing embodiments, those of ordinary skill in the art should understand that modifications can still be made to the technical solutions described in the foregoing embodiments, or equivalent replacements can be made to some or all of the technical features thereof; and these modifications or replacements do not cause the essence of the corresponding technical solutions to depart from the scope of the technical solutions of the embodiments of this disclosure, and they should all be encompassed within the scope of the specification of this disclosure. In particular, as long as there is no structural conflict, the technical features mentioned in the various embodiments can be combined in any manner.

## Claims

1. A pairing device, wherein the pairing device is configured to pair a first workpiece and a second workpiece in a prescribed orientation and comprises a misalignment pairing apparatus, and the misalignment pairing apparatus comprises:
a first positioning mechanism having a first pairing platform for placing the first workpiece; and
a second positioning mechanism having a second pairing platform for placing the second workpiece; wherein
the first positioning mechanism and the second positioning mechanism are configured to enable at least one of the first pairing platform and the second pairing platform to move along a first direction, and enable at least one of the first pairing platform and the second pairing platform to rotate around the first direction, and
the first workpiece and the second workpiece are enabled to have the prescribed orientation by positioning the first pairing platform and the second pairing platform at staggered positions along the first direction, and rotating at least one of the first pairing platform and the second pairing platform around the first direction; and the first pairing platform and the second pairing platform are brought closer along the first direction to pair the first workpiece and the second workpiece having the prescribed orientation.

2. The pairing device according to claim 1, wherein
the first pairing platform has a first bearing surface perpendicular to the first direction, and the first bearing surface is configured to support the first workpiece from one side of the first workpiece along the first direction; and
the second pairing platform has a second bearing surface perpendicular to the first direction, and the second bearing surface is configured to support the second workpiece from one side of the second workpiece along the first direction.

3. The pairing device according to claim 2, wherein
the first positioning mechanism comprises a first mounting frame and the first pairing platform mounted on the first mounting frame, a first linear drive apparatus is mounted on the first mounting frame, and the first pairing platform is capable of reciprocating along the first direction under the drive of the first linear drive apparatus; and
the second positioning mechanism comprises a second mounting frame and the second pairing platform mounted on the second mounting frame, a rotary drive apparatus is mounted on the second mounting frame, and the second pairing platform is capable of rotating at least 180 degrees around the first direction under the drive of the rotary drive apparatus.

4. The pairing device according to claim 3, wherein the first pairing platform comprises:
a first bearing plate providing the first bearing surface, wherein the first bearing plate is connected to an output end of the first linear drive apparatus;
a first positioning block movably disposed on the first bearing plate along a second direction, wherein the first positioning block is capable of moving to a position abutting the first workpiece; and
a second positioning block movably disposed on the first bearing plate along a third direction, wherein the second positioning block is capable of moving to a position abutting the first workpiece; wherein
the first direction, the second direction, and the third direction are pairwise perpendicular.

5. The pairing device according to claim 4, wherein the second pairing platform comprises:
a second bearing plate providing the second bearing surface, wherein the second bearing plate is connected to an output end of the rotary drive apparatus; and
a third positioning block and a fourth positioning block that are movably disposed on the second bearing plate along directions perpendicular to the first direction, and the third positioning block and the fourth positioning block are capable of moving to positions abutting the second workpiece, wherein a movement direction of the third positioning block and a movement direction of the fourth positioning block are perpendicular to each other.

6. The pairing device according to any one of claims 3 to 5, wherein the first positioning mechanism and the second positioning mechanism are configured to further enable the first pairing platform and the second pairing platform to move closer to or away from each other along a second direction, wherein the second direction is perpendicular to the first direction.

7. The pairing device according to claim 6, wherein the first mounting frame of the first positioning mechanism is mounted on a first guide rail extending along the second direction and configured to be capable of sliding along the first guide rail.

8. The pairing device according to claim 7, wherein the misalignment pairing apparatus comprises a base, and the second mounting frame of the second positioning mechanism is fixedly disposed on the base; and
the first guide rail is fixedly mounted on the base, the first guide rail is provided with a second linear drive apparatus, the first mounting frame is connected to an output end of the second linear drive apparatus, and the first mounting frame is capable of reciprocating along the second direction under the drive of the second linear drive apparatus, thereby enabling the first pairing platform to move closer to or away from the second pairing platform.

9. The pairing device according to any one of claims 1 to 8, wherein
the first workpiece comprises at least one first jelly roll, and the first jelly roll has a protruding first tab;
the second workpiece comprises at least one second jelly roll, and the second jelly roll has a protruding second tab;
the prescribed orientation comprises: along a second direction perpendicular to the first direction, the first tab of the first jelly roll protruding from a side facing towards the second jelly roll, and the second tab of the second jelly roll protruding from a side facing towards the first jelly roll; and
the pairing comprises: the first tab and the second tab of the first jelly roll and the second jelly roll that have the prescribed orientation having portions overlapping and abutting along the first direction.

10. The pairing device according to any one of claims 1 to 9, wherein the pairing device further comprises a dual-flip pairing apparatus, and the dual-flip pairing apparatus is configured to perform a dual-flip operation and a dual-lowering operation, wherein
the dual-flip operation comprises simultaneously flipping two first workpiece components distributed along a second direction perpendicular to the first direction around the second direction; and
the dual-lowering operation comprises simultaneously moving the two first workpiece components along the first direction to first lowering positions, wherein the two first workpiece components moved to the first lowering positions are configured to be stacked respectively with two unflipped second workpiece components, so as to form the first workpiece and the second workpiece.

11. The pairing device according to claim 10, wherein the dual-flip pairing apparatus comprises:
a first base frame;
a dual-lowering drive apparatus mounted on the first base frame; and
a dual-flip mechanism connected to an output end of the dual-lowering drive apparatus, wherein the dual-flip mechanism is configured to be capable of respectively clamping the two first workpiece components and performing the dual-flip operation, wherein
the dual-lowering drive apparatus is capable of driving the dual-flip mechanism to reciprocate along the first direction to perform the dual-lowering operation.

12. The pairing device according to claim 11, wherein the dual-flip mechanism comprises:
a dual-flip mounting frame connected to an output end of the dual-lowering drive apparatus;
a dual-flip drive apparatus mounted on the dual-flip mounting frame; and
a dual-clamping assembly connected to an output end of the dual-flip drive apparatus, wherein the dual-clamping assembly is configured to be capable of simultaneously clamping the two first workpiece components; wherein
the dual-flip drive apparatus is capable of driving the dual-clamping assembly to flip around the second direction to perform the dual-flip operation.

13. The pairing device according to claim 12, wherein the dual-clamping assembly comprises two first clamping mechanisms spaced apart along the second direction, and the first clamping mechanism comprises:
a first clamping mounting frame connected to an output end of the dual-flip drive apparatus; and
two first clamping structures respectively connected to the first clamping mounting frame, wherein the two first clamping structures are disposed opposite and configured to respectively clamp opposite ends of the first workpiece component.

14. The pairing device according to claim 13, wherein the first clamping mounting frame comprises a first mounting block, a first movable arm drive apparatus, and two first movable arms respectively connected to the first mounting block, the two first clamping structures are connected to the two first movable arms in a one-to-one correspondence, and the first movable arm drive apparatus is mounted on the first mounting block and capable of driving the two first movable arms to move closer to or away from each other.

15. The pairing device according to any one of claims 10 to 14, wherein the pairing device further comprises a single-flip pairing apparatus, the single-flip pairing apparatus is configured to be capable of performing a single-flip operation and a single-lowering operation to adjust the first workpiece and the second workpiece that are paired by the dual-flip pairing apparatus into a mutually upside-down posture, wherein
the single-flip operation comprises flipping the first workpiece around the second direction;
the single-lowering operation comprises moving the flipped first workpiece along the first direction to a second lowering position, so that the flipped first workpiece and an unflipped second workpiece are in a mutually upside-down posture, and
the first workpiece and the second workpiece in the mutually upside-down posture are capable of being adjusted by the misalignment pairing apparatus to pair in the prescribed orientation.

16. The pairing device according to claim 15, wherein the single-flip pairing apparatus comprises:
a second base frame;
a single-lowering drive apparatus mounted on the second base frame; and
a single-flip mechanism connected to an output end of the single-lowering drive apparatus, wherein the single-flip mechanism is configured to be capable of clamping the first workpiece and performing the single-flip operation, wherein
the single-lowering drive apparatus is capable of driving the single-flip mechanism to reciprocate along the first direction to perform the single-lowering operation.

17. The pairing device according to claim 16, wherein the single-flip mechanism comprises:
a single-flip mounting frame connected to an output end of the single-lowering drive apparatus;
a single-flip drive apparatus mounted on the single-flip mounting frame;
a single-clamping assembly connected to an output end of the single-flip drive apparatus, wherein the single-clamping assembly is configured to be capable of clamping the first workpiece; wherein
the single-flip drive apparatus is capable of driving the single-clamping assembly to rotate around the second direction to perform the single-flip operation.

18. The pairing device according to any one of claims 10 to 17, wherein the first workpiece component and the second workpiece component each comprise a jelly roll, and
the first workpiece and the second workpiece each comprise a cell group composed of at least two jelly rolls.

19. A pairing method using a pairing device to pair a first workpiece and a second workpiece, wherein the pairing device comprises a first positioning mechanism and a second positioning mechanism, the first positioning mechanism has a first pairing platform; the second positioning mechanism has a second pairing platform; the first positioning mechanism and the second positioning mechanism are configured to be capable of enabling at least one of the first pairing platform and the second pairing platform to move along a first direction, and capable of enabling at least one of the first pairing platform and the second pairing platform to rotate around the first direction; wherein
the pairing method comprises:
a misalignment step of positioning the first pairing platform with the first workpiece placed thereon and the second pairing platform with the second workpiece placed thereon at staggered positions along the first direction;
a rotation step of enabling at least one of the first pairing platform with the first workpiece placed thereon and the second pairing platform with the second workpiece placed thereon to rotate a predetermined angle around the first direction, thereby making the first workpiece and the second workpiece have a prescribed orientation; and
a pairing step of bringing the first pairing platform and the second pairing platform closer along the first direction to pair the first workpiece and the second workpiece having the prescribed orientation.

20. The pairing method according to claim 19, wherein
in the misalignment step, the first pairing platform is moved along the first direction to a position staggered along the first direction relative to the second pairing platform; and/or
in the pairing step, the first pairing platform is moved along the first direction to a position close to the second pairing platform to pair the first workpiece and the second workpiece.

21. The pairing method according to claim 19 or 20, wherein before the misalignment step, the pairing method further comprises:
a placement step of placing the first workpiece and the second workpiece with a same orientation on the first pairing platform and the second pairing platform, respectively, and
in the rotation step, enabling the second pairing platform with the second workpiece placed thereon to rotate 180 degrees around the first direction, thereby making the first workpiece and the second workpiece have the prescribed orientation, wherein the prescribed orientation is that the first workpiece and the second workpiece have opposite orientations.

22. The pairing method according to claim 21, wherein
the pairing method further comprises:
a first translation step of enabling the first pairing platform to move away from the second pairing platform along a second direction, wherein the second direction is perpendicular to the first direction; and
a second translation step of enabling the first pairing platform to move closer to the second pairing platform along the second direction, wherein
the first translation step is between the placement step and the misalignment step, and the second translation step is between the rotation step and the pairing step.

23. The pairing method according to claim 19, wherein before the misalignment step, the pairing method further comprises:
a flipping step of flipping the first workpiece having a first posture around a first flipping center axis into a second posture;
a placement step of placing the first workpiece and the second workpiece with a same orientation on the first pairing platform and the second pairing platform, respectively, wherein the first workpiece has undergone the flipping step and has the second posture, and the second workpiece has not undergone flipping and has the first posture, and
in the rotation step, enabling the second pairing platform with the second workpiece placed thereon to rotate 180 degrees around the first direction, thereby making the first workpiece and the second workpiece have the prescribed orientation.

24. The pairing method according to claim 19, wherein before the misalignment step, the pairing method further comprises:
a dual-flipping step of flipping two first workpiece components having a first posture around a second flipping center axis into a second posture;
a stacking step of stacking the two first workpiece components having the second posture, which have undergone the dual-flipping step, respectively with two unflipped second workpiece components having the first posture, so as to form a first workpiece and a second workpiece;
a placement step of placing the first workpiece and the second workpiece with a same orientation on the first pairing platform and the second pairing platform, respectively, and
in the rotation step, enabling the second pairing platform with the second workpiece placed thereon to rotate 180 degrees around the first direction, thereby making the first workpiece and the second workpiece have the prescribed orientation.

25. The pairing method according to claim 24, wherein after the stacking step and before the placement step, the pairing method further comprises:
a single-flipping step of flipping the first workpiece, formed by stacking the first workpiece component and the second workpiece component, 180 degrees around a third flipping center axis, and
in the placement step, placing the first workpiece, flipped 180 degrees in the single-flipping step, on the first pairing platform.
